# EUROPEAN PATENT SPECIFICATION

(11) **EP 2 996 171 B1**
(45) Date of publication and mention of the grant of the patent: **31.10.2018**
(21) Application number: 14794193.4
(22) Date of filing: 09.05.2014
(51) Int. Cl.: H01M 2/02, B32B 15/08, B32B 7/12, B32B 27/28, B32B 27/30, B32B 27/42, H01G 11/78, B32B 15/20, B32B 15/082, H01M 10/0525

(54) **OUTER COVERING FOR LITHIUM-ION CELL**
DECKSCHICHT FÜR LITHIUM-IONEN-ZELLEN
REVÊTEMENT EXTERNE POUR UNE PILE LITHIUM-ION

(30) Priority: 09.05.2013 JP 2013099608
(43) Date of publication of application: 16.03.2016
(73) Proprietor: Toppan Printing Co., Ltd., Tokyo 110-0016 (JP)
(72) Inventor: MURATA, Koji, Tokyo 110-0016 (JP); SUZUTA, Masayoshi, Tokyo 110-0016 (JP)
(74) Representative: Hoffmann Eitle
(86) International application number: PCT/JP2014/062457
(87) International publication number: WO 2014/181862

(56) References cited:
- EP-A1- 2 202 823
- WO-A1-2009/041077
- JP-A- 2011 052 298
- JP-A- 2011 065 834
- JP-A- 2011 065 834
- JP-A- 2011 187 386
- JP-A- 2011 187 386
- JP-A- 2013 058 326

## Description

### [Technical Field]

This invention relates to a packaging material for lithium ion cells.

### [Background Art]

For secondary cells for consumer use as employed in personal computers, mobile devices such as cell phones, video cameras and the like, extensive developments have been made on lithium ion cells (which may also be called lithium ion secondary cells) that can be made ultra thin or miniaturized although high in energy.

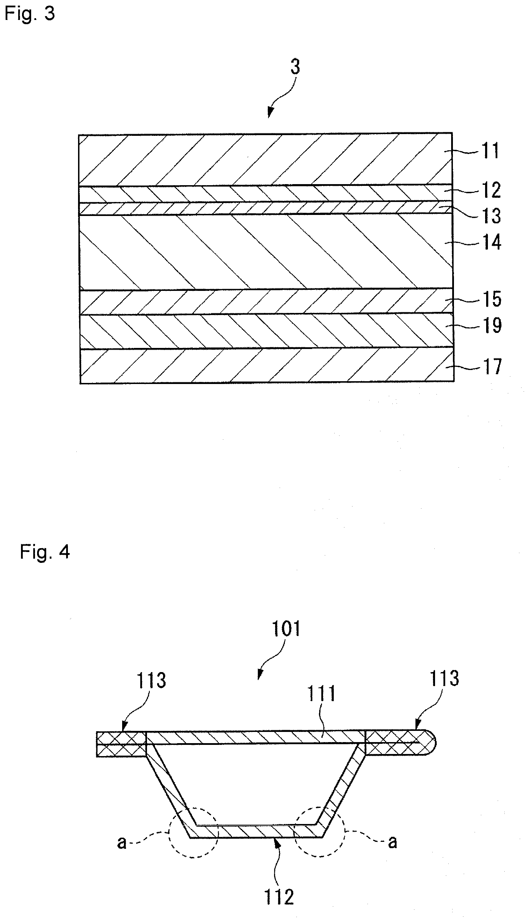

As a packaging material for lithium ion cell, metallic cans have been hitherto employed. However, in view of the advantages of the lightweight and the freedom to choose a cell shape, there have been recently used moldings (hereinafter referred to as "deep-draw moldings"), obtained by deep drawing a multilayer laminate film (e.g. a laminate structure such as of a heat-resistant base material layer/aluminum foil layer/sealant (thermally-fusible film) layer) by cold forming. More particularly, as exemplified in Fig. 4, part of a multilayer-structured packaging material 111 is deep-drawn by cold forming to form a recess 112, and the remaining portions of the packaging material 111 are folded back. In the state of accommodating a content, a sealing portion 113 is thermally sealed to provide a deep-drawn molding 101.

The lithium ion cell is formed, for example, by accommodating, as a cell body in a deep-drawn molding, an electrolytic solution dissolving a lithium salt in an aprotic solvent such as propylene carbonate, ethylene carbonate, dimethyl carbonate, diethyl carbonate, ethyl methyl carbonate or the like, or an electrolyte layer made of a polymer gel impregnated with such an electrolytic solution as indicated above, along with a positive electrode material, a negative electrode material and a separator, and subsequent heat-sealing.

The electrolytic solution is highly permeable into the sealant layer formed of a thermally fusible film. If the electrolytic solution permeates into the sealant layer, the permeated electrolytic solution may sometimes cause laminate strength between the aluminum foil layer and the sealant layer to be lowered. For the lithium salt serving as an electrolyte of the electrolytic solution, LiPF₆, LiBF₄ and the like are used. If moisture is permeated into the deep-drawn molding, the lithium salt is decomposed to generate hydrofluoric acid, thereby causing the corrosion of metal surface and the lowering of laminate strength between the adjacent layers of the multilayer film. The lowering in laminate strength between the adjacent layers of the laminate film eventually causes the leakage of the electrolytic solution to outside.

Accordingly, in order to ensure long-term reliability of the packaging material for lithium ion cell in the form of a multilayer arrangement such as of a laminate film, importance is placed on inhibiting the corrosion of a metal foil (aluminum foil) and suppressing the laminate strength between adjacent layers from being lowered due to the electrolytic solution.

Large-scale cells or capacitors have been in use in the field of automobiles which develop electric vehicles (EV) making use of secondary cells alone and hybrid electric vehicles (HEV) making use of gasoline and secondary cells in combination, or in the field of electric storage which develops electric double layer capacitors (EDLC) capable of storing electric power obtained by solar cells or wind-power generation and lithium ion capacitors (LIC) having both characteristics of secondary cells and capacitors. In the market of such a large-scale secondary cell or capacitor, it is of course required that the secondary cells have more excellent long-term reliability (10 to 30 years).

The evaluation of the long-term stability is performed, for example, according to an accelerated assessment wherein the resistance to electrolytic solution is evaluated under such conditions that moisture is contained in an electrolytic solution to intentionally cause hydrofluoric acid to be generated.

As stated above, the electrolytic solution used in lithium ion cells are liable to be influenced by moisture, so that a lithium ion cell is fabricated in a dry room environment. In order to suppress the influence of moisture, especially, by moisture absorption of a base material layer, the fabrication of a lithium ion cell usually has the step of removing moisture in such a way that a laminate film molded by deep drawing is stored in an environment of approximately 100°C (under reduced pressure, if necessary) over several hours to several days. However, with such a step of removing moisture as mentioned above, lifting (peeling off) between the base material layer and the aluminum foil layer may occur in some cases. This lifting is a phenomenon occurring in such a way that the base material layer is shrunk by the influence of a residual stress occurring upon cold molding and stress relaxation in the storage environment temperature. This lifting is prone to occur at a site where a great strain is imposed, especially, such as on a drawn corner of a deep-drawn molding (e.g. a portion corresponding to a region a of the deep-drawn molding 101 shown in Fig. 4).

In the filed of large-scale secondary cells and capacitors, large-sized electrode terminals corresponding to their electric capacitance may be used in some cases. Where such a large-sized electrode terminal is heat-sealed by heat-sealing a tub film, heat-sealing may be performed under more severe conditions of a temperature of not lower than 180°C, high pressure and long time than sealing conditions for consumer application in order to prevent an adhesion failure at a heat-sealed portion. In this case, the lifting between the base material layer and the aluminum foil layer may occur by adding preheating of seal bars for heat sealing to a corner of the deep-drawn molding.

Such lifting leads to the lowering of reliability in the fields of large-scale secondary cells or capacitors, especially, requiring excellent long-term stability. Accordingly, with the multilayer-structured packaging material for lithium ion cell such as a laminate film, it is needed to improve the heat-resistant adhesion between the base material layer and the aluminum foil layer and also to improve the heat-resistant adhesion particularly at the drawn corners of a deep-drawn molding.

Moreover, there are some cells wherein an electrolytic solution is leaked out during a cell fabrication process. On this occasion, if such a solution is attached to problem-free cells located around the cell from which the electrolytic solution has been leaked out or if the cell in question is exposed to an atmosphere of the electrolytic solution, there is some concern that the aluminum foil layer may be corroded, thereby leading to a lowering of the adhesion force with the base material layer. In this case, the lifting between the base material layer and the aluminum foil layer may occur after lapse of a long time.

For a method of enhancing the adhesion between the aluminum foil layer and the base material layer, there is known one wherein a chemical conversion treatment layer is formed by subjecting the aluminum foil surface at a side facing the base material layer to a chemical conversion treatment such as a chromate treatment (e.g. Patent Literatures 1 to 2). The chemical conversion treatment is advantageous in that aside from the improved adhesion, if an electrolytic solution is attached to the outer layer side of the packaging material for lithium cell, the lowering of the adhesion is unlikely to occur due to the corrosion inhibiting effect of the treatment.

However, for the formation of a chemical conversion treatment layer, great limitation is placed on a coating apparatus, with the attendant problem that productivity becomes poor. For instance, the chemical conversion treatment such as a chromate treatment enables the aluminum foil layer and the chemical conversion treatment layer to be formed as an inclined structure, so that a function of etching against the aluminum foil layer may be imparted to a treating agent itself. This etching function is imparted by adding, to the treating agent, an inorganic acid such, for example, as hydrochloric acid, sulfuric acid, nitric acid, hydrofluoric acid or the like, or a slat thereof. The treating agent acts to frequently corrode a coating apparatus, with some concern that limitation is placed on the type of coating apparatus, thereby entailing environmental degradation. In order to more enhance the adhesion, there may be some cases where prior to the chemical conversion treatment with a treating agent, there is provided a step of immersing the aluminum foil in an acid or alkali bath, followed by defatting and etching. These steps are high in unit price of the treatment, and become the rate-limiting step in the production of a packaging material for lithium ion cell, thereby lowering productivity.

Recently, in view of concern about the influence on environments, not only hexavalent chromium hitherto known to have toxicity, but also trivalent chromium might be subject to regulation. In this connection, the packaging material for lithium cell making use of the chromate treatment might also be subject to regulation. Thus, requirements for members making no use of chromate have been gradually increased.

To cope with these problems, there has been proposed, in Patent Literature 3, a packaging material for lithium ion cell having a base material layer, and an adhesive layer, an undercoat treated layer, an aluminum foil layer, a corrosion inhibition treatment layer, an adhesive resin layer and a sealant layer successively stacked on one surface of the base material layer wherein the undercoat treated layer used is one making use of a layer, which is formed of a coating composition comprising an oxazoline group-containing resin having two or more oxazoline groups, and one or more acrylic resins selected from the group consisting of poly(meth)acrylic acid and copolymers of meth(acrylic acid and other types of polymerizable monomers and has an amide ester site.

### Citation List

### Patent Literature

PTL 1: Japanese Unexamined Patent Application No. 2002-96419
PTL 2: Japanese Unexamined Patent Application No. 2007-294382
PTL 3: Japanese Unexamined Patent Application No. 2011-187386

JP2011065834 and EP2202823 disclose packaging materials used for packaging lithium batteries.

### [Summary of Invention]

### [Technical Problem]

According to the technique described in Patent Literature 3, there can be obtained a packaging material for lithium ion cell, in which adhesion between a base material layer and an aluminum foil layer can be enhanced without carrying out a chemical conversion treatment such as a chromate treatment or the like and which has excellent deep drawing moldability.

However, the packaging material for lithium ion cell still has a room for improvement with respect to the long-term reliability in an atmosphere of an electrolytic solution. Hence, there has been a demand for new means to improve the long-term reliability in an atmosphere of an electrolytic solution.

The present invention has been made under such circumstances as set forth above and has for its object the provision of a packaging material for lithium ion cell, which has high adhesion between a base material layer and an aluminum foil layer without carrying out a chemical conversion treatment such as a chromate treatment and has excellent deep-drawing moldability.

### [Solution to Problem]

In order to solve the above problems, the invention is defined in claim 1 and has the following embodiments.

A packaging material for lithium ion cell of a first embodiment of the invention is made of a laminate including an adhesive layer, an undercoat treated layer, an aluminum foil layer, a corrosion inhibition treatment layer, an adhesive resin layer and a sealant layer successively stacked on one surface of a base material layer. The undercoat treated layer contains the following components (A), (B) and (C), a total amount of the components (B) and (C) being at 200 to 12000 parts by mass per 100 parts by mass of the component (A).
(A) A crosslinking resin formed of (A1) a resin having two or more nitrogen-containing functional groups and (A2) a resin having a reactive functional group capable of reaction with the nitrogen-containing functional groups.
(B) A rare earth element oxide.
(C) Phosphoric acid or a phosphate.

A packaging material for lithium ion cell of a second embodiment of the invention is made of a laminate including a first adhesive layer, an undercoat treated layer, an aluminum foil layer, a corrosion inhibition treatment layer, a second adhesive layer and a sealant layer successively stacked on one surface of a base material layer. The undercoat treated layer contains the following components (A), (B) and (C), a total amount of the components (B) and (C) being at 200 to 12000 parts by mass per 100 parts by mass of the component (A).
(A) A crosslinking resin formed of (A1) a resin having two or more nitrogen-containing functional groups and (A2) a resin having a reactive functional group capable of reaction with the nitrogen-containing functional groups.
(B) A rare earth element oxide.
(C) Phosphoric acid or a phosphate.

In the packaging material for lithium ion cell of the first and second embodiments of the invention, it is preferred that the resin (A1) is an oxazoline group-containing resin containing two or more oxazoline groups, and the resin (A2) is at least one acrylic resin selected from the group consisting of poly(meth)acrylic acid, copolymers of (meth)acrylic acid and other types of polymerizable monomers and ion-neutralized products thereof.
(A1): An oxazoline group-containing resin containing two or more oxazoline groups.
(A2): At least one acrylic resin selected from the group consisting of poly(meth) acrylic acid, copolymers of (meth)acrylic acid and other types of polymerizable monomers and ion-neutralized products thereof.

In the packaging material for lithium ion cell of the first and second embodiments of the invention, it is preferred that the thickness of the undercoat treated layer is at 0.001 to 1 µm.

In the packaging material for lithium ion cell of the first and second embodiments of the invention, it is preferred that the undercoat treated layer further contains the following component (E) and the content of the component (E) is at 0.1 to 100 parts by mass per 100 parts by mass of the component (A).
(E) At least one compound selected from the group consisting of organosilanes represented by the following formula (1), hydrolyzates of the organosilanes and derivatives thereof, metal alkoxides represented by the following formula (2), hydrolyzates of the metal alkoxides and derivatives thereof

   R¹-Si(OR²)₃ ... (1)

   M(OR³)ₙ ... (2)

   (wherein R¹ is an organic group containing an alkyl group, a (meth)acryloyloxy group, a vinyl group, an amino group, an epoxy group or an isocyanate group, R² is an alkyl group, M is a metal ion, R³ is an alkyl group and n is a number corresponding to the valence of the metal ion).
   In the packaging material for lithium ion cell of the first and second embodiments of the invention, it is preferred that the undercoat treated layer further contains the following component (F) and the content of the component (F), calculated as metal, is at 0.1 to 100 parts by mass per 100 parts by mass of the component (A).
(F) Metal compound other than the component (E)

In the packaging material for lithium ion cell of the first and second embodiments of the invention, the component (F) is preferably a zirconium compound.

In the packaging material for lithium ion cell of the first and second embodiments of the invention, it is preferred that an adhesion improving layer, which is made of a crosslinked resin obtained by crosslinking at least one basic resin selected from the group consisting of a polyethylene imine, an ion-polymer complex formed of a polyethylene imine and a polymer having a carboxylic acid, a primary amine-grafted acrylic resin, a polyamine and a derivatives thereof, and an aminophenol resin, is provided between the adhesive layer and the undercoat treated layer.

### Effect of Invention

According to the embodiments of the invention, there can be provided a packaging material for lithium ion cell, which ensures high adhesion between a base material layer and an aluminum foil layer without carrying out a chemical conversion treatment such as a chromate treatment and has excellent deep drawing moldability.

### Brief Description of Drawings

[Fig. 1] is a schematic sectional view showing a packaging material for lithium ion cell according to a first embodiment of the invention.
[Fig. 2] is a schematic sectional view showing a packaging material for lithium ion cell according to a second embodiment of the invention.
[Fig. 3] is a schematic sectional view showing a packaging material for lithium ion cell according to a third embodiment of the invention.
[Fig. 4] is a sectional view showing an example of a molding obtained by deep drawing of a packaging material for lithium ion cell.

### [Description of Embodiments]

The packaging material for lithium ion cell of the invention (which may be hereinafter referred to simply as "packaging material") is described by way of embodiments with reference to the accompanying drawings.

### [First embodiment]

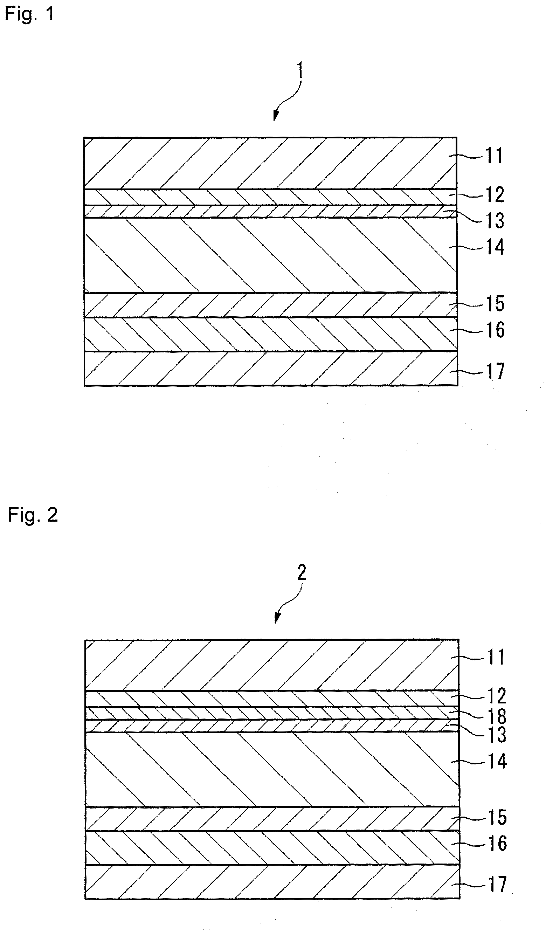

Fig. 1 is a schematic sectional view of a laminate serving as a packaging material according to a first embodiment of the invention.

A packaging material 1 is constituted of a laminate, which includes, successively stacked on one surface of a base material layer 11, an adhesive layer 12, an undercoat treatment layer 13, an aluminum foil layer 14, a corrosion inhibition treatment layer 15, an adhesive resin layer 16 and a sealant layer 17.

The packaging material 1 has such a layer arrangement as mentioned above, so that performance required for the packaging material for lithium ion cell can be developed.

In the packaging material 1, the undercoat treated layer 13 containing specific types of components (A) to (C) in specified amounts is provided on the aluminum foil layer at a position in the vicinity of the base material layer 11 and thus, adhesion between the base material layer 11 and the aluminum foil layer 14 is improved. For instance, when a molding is formed from the packaging material 1 by cold forming such as deep draw molding under conditions where the aluminum foil layer 14 has not been subjected to conventional chemical conversion treatment or when the molding is subsequently allowed to stand in a high temperature storage environment or is exposed to an atmosphere of an electrolytic solution, the adhesion between the base material layer 11 and the aluminum foil layer 14 is unlikely to be lowered. Accordingly, the lifting (peeling off) between the base material layer and the aluminum foil layer 14 is unlikely to occur at a portion where a great strain exists as in the drawn corners of a deep drawn molding. Because of such high resistances to thermal adhesion and electrolytic solution as set out above, the packaging material is high in long-term reliability as a whole.

### (Undercoat treated layer 13)

The undercoat treated layer 13 contains the following components (A), (B) and (C) wherein a total amount of the components (B) and (C) is at 200 to 12000 parts by mass per 100 parts by mass of the component (A).
(A) A crosslinking resin formed of (A1) a resin having two or more nitrogen-containing functional groups and (A2) a resin having a reactive functional group reacting with the nitrogen-containing groups.
(B) A rare earth element oxide.
(C) Phosphoric acid or a phosphate salt.

The component (A) contributes mainly to improving a thermal adhesion resistance. When the undercoat treated layer 13 is provided by a number of processes, the nitrogen-containing functional groups of the resin (A1) and the reactive functional group of the resin (A2) are reacted with each other, thereby forming a crosslinked site containing the nitrogen atom. The formation of the crosslinked site results in improved adhesion between the base material layer 11 and the aluminum foil layer 14. The undercoat treated layer 13 containing the crosslinked site containing the nitrogen atom serves to impart a good thermal adhesion resistance to the aluminum foil layer 14.

Examples of the nitrogen-containing functional group of the resin (A1) include an oxazoline group, an amino group and the like. For the reactive functional group of the resin (A2), appropriate groups can be chosen correspondingly to the nitrogen-containing functional group of the resin (A1).

For a combination of the resin (A1) and the resin (A2) in the component (A), mention is made, for example, (A-1), (A-2) and the like indicated below.
(A-1): The resin (A1) is an oxazoline group-containing resin containing two or more oxazoline groups (which may be hereinafter referred to as resin (A1-1)), and the resin (A2) is at least one acrylic resin selected from the group consisting of poly(meth)acrylic acid, a copolymer of (meth)acrylic acid and other type of polymerizable monomer, and an ion neutralized product thereof, (which may be hereinafter referred to as resin (A2-1)).
(A-2): The resin (A1) is an amino group-containing resin containing two or more amino groups, (which may be hereinafter referred to as resin (A1-2)), and the resin (A2) is a glycidyl group-containing compound, (which may be hereinafter referred to as resin (A2-2)).

As to the resin (A1-1), no specific limitation is placed thereon so far as it is a resin having at least two oxazoline groups in one molecule.

As the resin (A1-1), mention is made, for example, of oxazoline group-containing resins having an acrylic skeleton as a main chain and two or more oxazoline groups, styrene/acrylic resins such as an oxazoline group-containing resin whose main chain is made of a styrene/acrylic skeleton and which contains two or more oxazoline groups, a styrene resin whose main chain is made of a styrene skeleton and which contains two or more oxazoline groups, an acrylonitrile/styrene resin whose main chain is made of an acrylonitrile/styrene skeleton and which contains two or more oxazoline groups, and the like.

The resin (A-1) is obtained, for example, by copolymerizing an oxazoline group-containing monomer such as isopropenyl oxazoline with other type of polymerizable monomer copolymerizable with the oxazoline group-containing monomer, such as a variety of acrylic monomers, styrene, acrylonitrile or the like.

The ratio of the oxazoline group-containing monomer forming the resin (A1-1) is preferably at 0.5 mmol/g to 50 mmol/g, more preferably at 1 mmol to 10 mmol/g. If the oxazoline group-containing monomer is less than 0.5 mmol/g, it is difficult to obtain adequate adhesion. Although the oxazoline group-containing monomer may exceeds 50 mmol/g, its performance (adhesion) is saturated.

The resin (A2-1) is at least one acrylic resin selected from the group consisting of poly(meth)acrylic acid, copolymers of (meth)acrylic acid and other types of polymerizable monomers and ion neutralized products thereof.

The resin (A2-1) has a carboxyl group derived from (meth)acrylic acid and this carboxyl group reacts with the oxazoline group of the component (A1) to form an amide ester site.

The acrylic resin of the resin (A2-1) is preferably made of a resin, which is mainly comprised of (meth)acrylic acid or an ion salt (ammonium salt, sodium salt or the like) of (meth)acrylic acid.

Examples of other types of polymerizable monomers to be copolymerized with (meth)acrylic acid include alkyl (meth)acrylate monomers (wherein the alkyl group is a methyl group, an ethyl group, an n-propyl group, an i-propyl group, an n-butyl group, an i-butyl group, a t-butyl group, a 2-ethylhexyl group, a cyclohexyl group or the like), hydroxyl group-containing (meth)acrylic monomers such as 2-hydroxypropyl (meth)acrylate and the like; and amide group-containing monomers such as (meth)acrylamide, an N-alkyl (meth)acrylamide and an N,N-dialkyl (meth)acrylamide (wherein the alkyl group is a methyl group, an ethyl group, an n-propyl group, an i-propyl group, an n-butyl group, an i-butyl group, a t-butyl group, a 2-ethylhexyl group, a cyclohexyl group or the like), an N-alkoxyacrylamide and an N,N-dialkoxy(meth)acrylamide (wherein the alkoxy group is a methoxy group, an ethoxy group, a butoxy group, an isobutoxy group or the like), N-methylol(meth)acrylamide, N-phenyl(meth)acrylamide and the like. For other polymerizable monomers, there may be used styrene, α-methylstyrene, vinyl methyl ether, vinyl ethyl ether, maleic acid, an alkyl monomaleate, fumaric acid, an alkyl monofumarate, itaconic acid, an alkyl monoitaconate, (meth)acrylonitrile, vinylidene chloride, ethylene, propylene, vinyl chloride, vinyl acetate, butadiene and the like.

The resin (A2-1) may be an ion neutralized product. As an ion neutralized product, mention is made of ion salts, such as an ammonium salt, a sodium salt and the like, of the above resins.

The amino group-containing resin of the resin (A1-2) is not specifically limited so far as it is a resin having at least two amino groups in one molecule. For instance, mention is made of polyarylamines, aminophenol resins and the like.

The glycidyl group-containing compounds of the resin (A2-2) preferably include resins having at least two glycidyl groups in one molecule, for which polyglycerol polyglycidyl ethers are mentioned, for example.

For the component (A), the combination of (A-1) is preferred among those indicated above. Since the undercoat treated layer 13 has the amide ester site formed by reaction between the oxazoline group of the resin (A1-1) and the carboxyl group of the resin (A2-1), adhesion between the base material layer 11 and the aluminum foil layer 14 is improved.

In view of further improving the adhesion, it is preferred to make use that the aluminum foil for the aluminium foil layer 14 is amphoteric in nature. More particularly, the adhesion can be further improved not only by the effect of the amide ester site, but also by impartment of the acid/base interaction wherein the carboxyl group of the resin (A2-1) is acted as "acid group". To this end, it is preferred that the carboxyl group contained in the resin (A2-2) is formulated equal to or in excess of the oxazoline group contained in the resin (A1-1).

The ratio of the oxazoline group of the resin (A1-1) to the carboxyl group of the resin (A2-1) can be determined by using mainly "oxazoline value" based on the oxazoline group contained in the resin (A1-1) and "acid value" based on the carboxyl group contained in the resin (A2-1).

Although the ratio by mass of the resin (A1-1) and the resin (A2-1) is not specifically limited because it differs depending on the type of copolymerizing component and its molar ratio (or ratio by mass) in the respective components, (A1-1)/(A-2-1) is preferably at 1/99 to 99/1, more preferably at 1/99 to 45/54. If the rate of the resin (A1-1) relative to a total amount of the resins (A1-1) and (A2-1) is not less than 1 % by mass, a satisfactory crosslinking density is easy to obtain, and the amount of the amide ester site increases, resulting in improved heat resistance and adhesion. A less rate of the resin (A1-1) relative to a total amount of the resins (A1-1) and (A2-1) leads to the likelihood of obtaining such an effect of carboxylic acid as set out before. If not larger than 45 % by mass, it becomes easy to improve adhesion owing to the carboxyl group not reacting with the oxazoline group.

The component (B) is a rare earth element oxide.

As a rare earth element oxide, mention is made of cerium oxide, yttrium oxide, neodymium oxide, lanthanum oxide and the like. Of these, cesium oxide is preferred.

For the component (B), materials in the form of fine particles (e.g. particles with an average particle size of 100 nm or below) are usually used, and the rare earth element oxide is used in the form of a sol to form the undercoat treated layer 13. The sol of the rare earth element oxide is one wherein fine particles of the rare earth element oxide is dispersed in a liquid dispersion medium.

For the liquid dispersion medium of the rare earth element oxide sol, there can be used, for example, a variety of solvents including water, an alcohol solvent, a hydrocarbon solvent, a ketone solvent, an ester solvent, an ether solvent and the like. Of these, water is preferred.

The component (B) contained in the undercoat treated layer 13 may be made of one, or two or more of the oxides.

The component (C) is phosphoric acid or a phosphate salt.

The component (C) is formulated as a dispersion stabilizer for stably dispersing the component (B) in the rare earth element oxide sol. Especially, it is preferred to use the component (C) as a surface treating agent of the rare earth element oxide. Since the undercoat treated layer 13 contains the component (C), the dispersion of the component (B) is stabilized. Moreover, aside from the dispersion stability, there can be obtained such effects that adhesion with the aluminum foil layer 14 is improved by utilizing the chelating ability of phosphoric acid in the field of the packaging material for lithium ion cell, that a resistance to electrolytic solution is imparted by capturing a metal ion (formation of a passivation film) dissolved out by the influence of hydrofluoric acid and that the cohesive force of the undercoat treated layer 13 is improved because of the likelihood of dehydration and condensation of phosphoric acid even at low temperatures.

For the component (C), mention is made, for example, of orthophosphoric acid, pyrophosphoric acid, metaphosphoric acid, and alkali metal salts and ammonium salts thereof.

In view of the functional development for use as a packaging material for lithium ion cell, preferred component (C) includes a condensed phosphoric acid such as trimetaphosphoric acid, tetrametaphosphoric acid, hexametaphosphoric acid, a ultrametaphosphoric acid or the like, or an alkali metal salt or ammonium salt thereof. Especially, when taking into consideration drying film-forming properties (drying capacity, heat quantity) at the time when a rare earth element oxide-containing layer is formed by various coating methods using a coating composition containing a rare earth element oxide sol, an agent that is excellent in low temperature reactivity is preferred. From the standpoint of excellent capability of dehydration condensation at low temperatures, a sodium salt is preferred. For a phosphate salt, a water-soluble salt is preferred.

The component (C) contained in the undercoat treated layer 13 may be made of one, or two or more of the compounds.

The content of the component (C) in the undercoat treated layer 13 is preferably not less than 1 part by mass, more preferably not less than 5 parts by mass, per 100 parts by mass of the component (B). If not less than 1 part by mass, not only the effect of the dispersion stabilization of the component (B) is sufficiently obtained, but also it becomes easy to satisfy the function as a packaging material for lithium ion cell. The upper limit of the content of the component (B) may be within a range not lowering the function of the component (B) and is preferably not larger than 100 parts by mass, more preferably not larger than 50 parts by mass and much more preferably not larger than 20 parts by mass, per 100 parts by mass of the component (B).

In the undercoat treated layer 13, the total amount of the components (B) and (C) is at 200 to 12000 parts by mass, preferably at 300 to 10000 parts by mas, more preferably at 500 to 10000 parts by mass and most preferably at 1000 to 8000 parts by mass, per 100 parts by mass of the component (A). If the component (A) is smaller in amount, the undercoat treated layer becomes brittle, thereby causing the likelihood of peeling off inside the layer to worsen adhesion. On the other hand, when the component (A) is larger, the rate of a rare earth element oxide sol contributing to adhesion with the aluminum foil layer is reduced thereby causing the adhesion to be worsened. This is also unfavorable with respect to a resistance to electrolytic solution. Accordingly, when the total amount of the components (B) and (C) is at 200 to 12000 parts by mass per 100 parts by mass of the component (A), the adhesion between the base material layer 11 and the aluminum foil layer 14, particularly, adhesion in an atmosphere of an electrolytic solution, is improved.

In order to further improve the adhesion, the undercoat treated layer 13 should preferably contain the following component (E). The component (E) serves to improve the adhesion between the undercoat treated layer 13 and the aluminum foil layer 14 when the undercoated treated layer 13 is formed according to a variety of processes.
(E) At least one compound selected from the group consisting of an organosilane represented by the following formula (1), a hydrolyzate of the organosilane and a derivative thereof (hereinafter referred to as component (E1)), and a metal alkoxide represented by the following formula (2), a hydrolyzate of the metal alkoxide and a derivative thereof (hereinafter referred to as "component (E2)")

   R¹-Si(OR²)₃ ... (1)

   M(OR³)ₙ ... (2)

   (wherein R¹ represents an organic group including an alkyl group, a (meth)acryloyloxy group, a vinyl group, an amino group, an epoxy group or an isocyanate group, R² represents an alkyl group, M represents a metal ion, R³ represents an alkyl group, n is a number corresponding to the valence of the metal ion).

As R¹ in the component (E1), mention is made of an alkyl group, a (meth)acroyloxyalkyl group, a vinyl group, an aminoalkyl group, a glycidoxyalkyl group, an isocyanate alkyl group or the like.

The component (E) includes, for example, ethyltrimethoxysilane, (meth)acryloxypropyltrimethoxysilane, vinyltrimethoxysilane, glycidoxypropyltrimethoxysilane, aminopropyltrimethoxysilane, and hydrolyzates and condensates (dimer, trimer, etc.) thereof. Among them, glycidoxytrimethoxysilane and epoxycyclohexylethyltrimethoxysilane, both containing an epoxy group, are preferred.

M in the component (E2) includes Si, Al, Ti, Zr or the like.

As the component (E2), mention is made, for example, of tetraethoxysilane, tripropoxyaluminum, and a hydrolyzate and a condensate thereof.

For a method of obtaining a hydrolyzate and its condensate of the components (E1) and (E2), there can be adopted known methods including a method wherein an acid or alkali is directly added to the organosilane or metal alkoxide. If necessary, a reaction catalyst, such as a tin compound, for promoting the reaction may be added.

The component (E) contained in the undercoat treated layer 13 may be made of one, or two or more of the compounds.

The content of the component (E) in the undercoat treated layer 13 is at 0.1 to 100 parts by mass, preferably at 0.3 to 50 parts by mass, per 100 parts by mass of the component (A). If the content of the component (E) is not less than 0.1 part by mass per 100 parts by mass of the component (A), it is likely to obtain an effect of improving adhesion. On the other hand, if the content of the component (E) exceeds 100 parts by mass relative to 100 parts by mass of the component (A), the improving effect of adhesion remains saturated.

When the undercoat treated layer 13 is provided according to any of a variety of processes, the resin (A1) and the resin (A2) of the component (A) react to form a crosslinked site thereby improving a heat resistance. In the undercoat treated layer 13, the heat resistance can be further improved by forming another crosslinked site other than the crosslinked site formed as mentioned above.

As an additive for forming another type of crosslinked site, the following component (F) is mentioned. More particularly, the crosslinking density of the undercoat treated layer 13 is further increased by the action of the component (F), so that the heat resistance of the undercoat treated layer is further improved.
(F) Metal compounds other than the component (E).

For the component (F), there can be used a metal compound capable of ion dissociation in the form of a solution when it is formulated in a coating composition containing the component forming the undercoat treated layer 13 and a liquid medium (solvent or dispersion medium). After coating the coating solution onto the aluminum foil layer 14 according to a variety of coating methods, the liquid medium is volatilized, whereupon the resin (A1) and the resin (A2) react with each other and the metal ion dissociated from the component (F) acts on the component (A) (e.g. acting on the unreacted carboxyl group of the resin (A2-1) and the unreacted amino group of the resin (A1-2)) to form ionic crosslinkage.

For the component (F), there may be used materials which are capable of ion dissociation (i.e. having solubility in solvent) when formulated in a coating composition and also capable of forming ionic crosslinkage through the dissociated metal ion acting on the component (A), for which water-soluble metal compounds are preferred. For instance, the following components (F1) and (F2) are mentioned.
(F1) Metal compounds whose aqueous solution becomes acidic.
(F2) Metal compounds whose aqueous solution becomes basic.

As the component (F1), mention is made, for example, of hydrochlorides, sulfates, nitrates, hydrofluorides and the like of a variety of metals. The metals for the metal compounds include zinc, iron, manganese, copper, chromium, zirconium, cobalt and the like. Alternatively, alkali (or alkaline earth) metals such as sodium, calcium and the like may also be used as the metal.

For the component (F2), mention is made, for example, of zirconium compounds such as dizirconium ammonium carbonate, dizirconium ammonium fluoride and the like.

The aqueous solution containing the component (F1) shows acidity. In this case, when taking it into consideration that the component (A) has to be used likewise in the form of a water-soluble acidic solution, it is necessary to use a material made of the resin (A1-1) and the resin (A2-1), and polymeth(acrylic) acid or a copolymer of (meth)acrylic acid and other type of polymerizable monomer as the resin (A2-1). However, since the resin (A1-1) has an oxazoline group (basic), the resin (A1-1) and the resin (A2-1) gradually react with each other in the coating composition prior to coating, with some concern that coating aptitude is lowered (i.e. an influence of the coating composition on its pot life). In this regard, it is preferred that an ion salt (or an ion neutralized product) such as an ammonium salt or sodium salt is used as the resin (A2-1) so as to suppress the reaction between the carboxyl group and the oxazoline group in the coating composition prior to coating, under which when the coating composition is dried for film formation, the carboxyl group and the oxazoline group are reacted with each other. More preferably, the resin (A2-1) used in this case is made of an ammonium salt that is unlikely to be left as an impurity during the course of the drying and film formation of the coating composition.

As stated above, the coating composition forming the undercoat treated layer 13 is preferably in the form of a basic solution at a stage prior to coating, so that an aqueous solution containing the component (F) should preferably be basic in nature. Accordingly, in view of the pot life and stability of the coating composition, the component (F2) is preferably used as the component (F) and is more preferably made of a dizirconium compound such as dizirconium ammonium carbonate, dizirconium ammonium fluoride or the like.

The component (F) contained in the undercoat treated layer 13 may be made of one, or two or more of the constituents. The content, calculated as metal, of the component (F) in the undercoat treated layer 13 is at 0.1 to 100 parts by mass, preferably at 0.5 to 50 parts by mass and more preferably at 1 to 30 parts by mass, per 100 parts by mass of the component (A). If the content, calculated as metal, of the component (F) is not less than 0.1 part by mass per 100 parts by mass of the component (A), the effect of improving adhesion with the component (F) is easy to obtain. If the content, calculated as metal, of the component (F) is not larger than 100 parts by mass per 100 parts by mass of the component (A), it is easy to suppress that the component (F) is left in the undercoat treated layer 13 as an unreacted matter to lower the cohesive force.

The undercoat treated layer 13 can be formed by coating, onto the aluminum foil layer 14, a coating composition containing the components (A) to (C) and, if necessary, other components, and a liquid medium (a solvent or dispersion medium), followed by drying and curing. On this occasion, the components (A) to (C) may be all formulated in one coating composition or may be formulated in different coating compositions. If formulated in different coating compositions, these coating compositions can be successively coated and dried to form a layer containing the components (A) to (C). The manner of forming the undercoat treated layer 13 is described in detail hereafter.

The thickness of the undercoat treated layer 13 is preferably at 0.001 to 1 µm. If the thickness of the undercoat treated layer 13 is not less than 0.001 µm, the adhesion between the base material layer 11 and the aluminum foil layer 14 is well improved. If the thickness of the undercoat treated layer 13 is not larger than 1 µm, moldability is improved and the heat quantity required for the crosslinking reaction does not become excessive to allow an easy drying and curing step thereby leading to improved productivity.

### (Base material layer 11)

The base material layer 11 serves to impart a heat resistance in the heat sealing step for the fabrication of a lithium ion cell and suppress the generation of pinholes as would occur during the course of moldability and distribution. Especially, with a packaging material for large-scale lithium ion cells, resistances to abrasion and chemicals and insulating properties can be imparted.

The base material layer 11 is preferably made of a resin film formed of an insulating resin. As such a resin film, mention is made of stretched or unstretched films such as polyester films, polyamide films, polypropylene films and the like. The base material layer 11 may be a resin layer with a single-layer structure formed of any one of these resin films, or a resin layer with a multilayer structure wherein two or more of these resin films are laminated.

For the resin layer, mention is made, for example, of a stretched or unstretched polyamide film, a stretched or unstretched polyester film, a double-layer film of a stretched polyamide film and a stretched polyester film.

In view of excellent moldability and heat resistance, the base material layer 11 is preferably made of a resin layer with a single-layer structure or multiplayer structure including a stretched polyamide film. From the standpoint of imparting an acid resistance, a resin layer with a multilayer structure including a stretched polyamide film is preferred, and a double-layer film of a stretched polyamide film and a stretched polyester film is more preferred.

In view of improvements in moldability, heat resistance, pinhole resistance and insulating properties, the thickness of the base material layer 11 is preferably at not less than 6 µm, more preferably at not less than 10 µm. From the standpoint of film thinning and good heat dissipation properties, the thickness is preferably at not larger than 60 µm, more preferably at not larger than 45 µm. Where the base material layer 11 is made of a resin layer with a multilayer structure, the thickness means a total thickness of the resin layer.

The outermost layer surface of the base material layer 11 (i.e. a surface of the base material layer 11 opposite to the first adhesive layer 12) may be coated with a variety of additives including, for example, an acid resistant agent, a flame retarder, a slipping agent, an anti-blocking agent, an antioxidant, a light stabilizer, a tackifier and the like.

As an acid resistant agent, mention is made of polyvinylidene chloride, a vinylidene chloride-vinyl chloride copolymer, maleic anhydride-modified polypropylene, a polyester resin, an epoxy resin, a phenolic resin, a fluorine resin, a cellulose ester, a urethane resin, an acrylic resin and the like.

As a slipping agent, mention is made of a fatty acid amide such as, for example, oleic acid amide, erucic acid amide, stearic acid amide, behenic acid amide, ethylenebisoleic acid amide, ethylenebiserucic acid amide or the like.

Favorable anti-blocking agents include a variety of fillers such as silica.

These additives may be used singly or in combination of two or more.

### (Adhesive layer 12)

The first adhesive layer 12 is one which increases the adhesion between the base material layer 11 and the aluminum foil layer 14. The first adhesive layer 12 can be formed by use of materials known as adhesives used in the lamination of a resin film and an aluminum foil. Examples of such an adhesive include a polyurethane-based adhesive comprising a main agent made of a polyol such as a polyester polyol, a polyether polyol, an acrylic polyol, a carbonate polyol or the like and a curing agent made of a bifunctional or higher functional isocyanate compound. When the curing agent is acted on the main agent, a polyurethane resin is formed.

For the polyester polyol, there can be used materials obtained by reaction between at least one kind of polybasic acid and at least one kind of diol. For the polybasic acid, mention is made of aliphatic dibasic acids such as succinic acid, glutaric acid, adipic acid, pimelic acid, suberic acid, azelaic acid, sebacic acid, brasylic acid and the like, and aromatic dibasic acids such as isophthalic acid, terephthalic acid, naphthalenedicarboxylic acid and the like. For the diol, mention is made of aliphatic diols such as ethylene glycol, propylene glycol, butanediol, neopentyl glycol, methyl pentanediol, hexanediol, heptanediol, octanediol, nonanediol, decanediol, dodecanediol and the like, alicyclic diols such as cyclohexanediol, hydrogenated xylylene glycol and the like, and aromatic diols such as xylylene glycol and the like.

The polyester polyols include polyester urethane polyols wherein the hydroxyl groups at both terminals of the above polyester polyols are subjected to chain propagation with an isocyanate compound itself, or an adduct, a burette form or an isocyanurate form consisting of at least one isocyanate compound. Examples of the isocyanate compound include 2,4- or 2,6-tolylene diisocyanate, xylylene diisocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, isopropylidenedicyclohexyl-4,4'-diisocyanate, and the like.

For the polyether polyol, there can be used polyether urethane polyols obtained by reaction of ether polyols such as polyethylene glycol, polypropylene glycol or the like and such isocyanate compounds as mentioned above as a chain propagation agent.

The acrylic polyols include copolymers mainly composed of poly(meth)acrylic acid. Such copolymers include copolymerized materials of monomers including: starting with hydroxyl group-containing monomers, such as 2-hydroxyethyl (meth)acrylate, 2-hydroxypropyl (meth)acrylate or the like; alkyl (meth)acrylate monomers (wherein the alkyl group is a methyl group, an ethyl group, an n-propyl group, an i-propyl group, an n-butyl group, an i-butyl group, a t-butyl group, a 2-ethylhexyl group, a cyclohexyl group or the like); amide group-containing monomers such as (meth)acrylamide, N-alkyl (meth)acrylamides and N,N-dialkyl (meth)acrylamide (wherein the alkyl group is a methyl group, an ethyl group, an n-propyl group, an i-propyl group, an n-butyl group, an i-butyl group, a t-butyl group, a 2-ethylhexyl group, a cyclohexyl group or the like), N-alkoxy (meth)acrylamides and N,N-dialkoxy (meth)acrylamides (wherein the alkoxy group is a methoxy group, an ethoxy group, a butoxy group, an iso-butoxy group or the like), N-methylol (meth)acrylamide, N-phenyl (meth)acrylamide and the like; glycidyl group-containing monomers such as glycidyl (meth)acrylamide, allyl glycidyl ether and the like; silane-containing monomers such as (meth)acryloxypropyltrimethoxysilane, (meth)acryloxypropyltriethoxysilane and the like; and isocyanate group-containing monomers such as (meth)acryloxypropyl isocyanate and the like.

For the carbonate polyol, there can be used materials obtained by reaction between carbonate compounds and diols. Usable carbonate compounds include dimethyl carbonate, diphenyl carbonate, ethylene carbonate and the like. As the diol, there can be used aliphatic diols such as ethylene glycol, propylene glycol, butanediol, neopentyl glycol, methylpentanediol, hexanediol, heptanediol, octanediol, nonanediol, decanediol, dodecanediol and the like, alicyclic diols such as cyclohexanediol, hydrogenated xylylenediol and the like, and aromatic diols such as xylylenediol and the like.

Additionally, there may be further used polycarbonate urethane polyols obtained by subjecting the hydroxyl group at the terminals of the polycarbonate polyols to chain propagation with such isocyanate compounds as indicated above.

These polyols may be used singly or in the form of blends of two or more depending on the function and performance required.

For the bifunctional or higher functional isocyanate compounds used as a curing agent, there may be used isocyanate compounds of the types as used for the chain propagation agent. As indicated before, mention is also made of the isocyanates themselves such as 2,4- or 2,6-tolylene diisocyanate, xylylene diisocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, isopropylidenedicyclohexyl-4,4'-diisocyanate, and the like, or an adduct, a burette form or isocyanurate product of at least one isocyanate compound selected from those isocyanate compounds indicated above.

The formulation amount of the curing agent is preferably at 1 to 100 parts by mass, more preferably at 5 to 50 parts by mass, per 100 parts by mass of the main agent. If less than 1 part by mass, there may be some concern that performance is not developed with respect to adhesion and a resistance to electrolytic solution. If larger than 100 parts by mass, the isocyanate group is present in excess, with concern that an unreacted group is left thereby giving influences on the quality of the adhesive film and also on the hardness.

In order to promote adhesion, the polyurethane adhesive may be further formulated with a carbodiimide compound, an oxazoline compound, an epoxy compound, a phosphorus compound, a silane coupling agent or the like.

As a carbodiimide compound, mention is made of N,N'-di-o-toluyl carbodiimide, N,N'-diphenyl carbodiimide, N,N'-di-2,6-dimethylphenyl carbodiimide, N,N'-bis(2,6-diisopropylphenyl)carbodiimide, N,N'-dioctyldecyl carbodiimide, N-triyl-N'-cyclohexyl carbodiimide, N,N'-di-2,2-di-t-butylphenyl carbodiimide, N-triyl-N'-phenyl carbodiimide, N,N'-di-p-nitrophenyl carbodiimide, N,N'-di-p-aminophenyl carbodiimide, N,N'-p-hydroxyphenyl carbodiimide, N,N'-di-cyclohexyl carbodiimide, N,N'-di-p-toluyl carbodiimide and the like.

For the oxazoline compound, mention is made of monooxazoline compounds such as 2-oxazoline, 2-methyl-2-oxazoline, 2-phenyl-2-oxazoline, 2,5-dimethyl-2-oxazoline, 2,4-diphenyl-2-oxazoline and the like, and dioxazoline compounds such as 2,2'-(1,3-phenylene)-bis(2-oxazoline), 2,2'-(1,2-ethylene)-bis(2-oxazoline), 2,2'-(1,4-butylene)-bis(2-oxazoline), 2,2'-(1,4-phenylene)-bis(2-oxazoline) and the like.

For the epoxy compound, mention is made of diglycidyl ethers of aliphatic diols such as 1,6-hexanediol, neopentyl glycol and polyalkylene glycol, polyglycidyl ethers of aliphatic polyols such as sorbitol, sorbitan, polyglycerol, pentaerythritol, diglycerol, glycerol, trimethylolpropane and the like, polyglycidyl ethers of alicyclic polyols such as cyclohexane dimethanol and the like, diglycidyl esters or polyglycidyl esters of aliphatic and aromatic polyvalent carboxylic acids such as terephthalic acid, isophthalic acid, naphthalene dicarboxylic acid, trimellitic acid, adipic acid, sebacic acid and the like, diglycidyl ethers or polyglycidyl ethers of polyvalent phenols such as resorcinol, bis-(p-hydroxyphenyl)methane, 2,2-bis-(p-hydroxyphenyl)propane, tris-(p-hydroxyphenyl)methane, 1,1,2,2-tetrakis(p-hydroxyphenyl)ethane and the like, N-glycidyl derivatives of amines such as N,N'-diglycidylaniline, N,N,N-diglycidyltoluidine, N,N,N',N'-tetraglycidyl-bis-(p-aminophenyl)methane and the like, triglycidyl derivatives of aminophenol, triglycidyltris(2-hydroxyethyl)isocyanurate, triglycidyl isocyanurate, an ortho-cresol epoxy resin, a phenol novolac epoxy resin and the like.

As a phosphorus compound, mention is made of tris(2,4-di-t-butylphenyl)phosphite, tetrakis(2,4-di-t-butylphenyl)-4,4'-biphenylene phosphonite, bis(2,4-di-t-butylphenyl)pentaerythritol diphosphite, bis(2,6-di-t-butyl-4-methylphenyl)pentaerythritol diphosphite, 2,2-methylene bis((4,6-di-t-butylphenyl)octyl phosphite, 4,4'-butylidene-bis(3-methyl-6-t-butylphenyl-di-tridecyl)phosphite, 1,1,3-tris(2-methyl-4-ditridecyl phosphite-5-t-butylphenyl)butane, tris(mixed mono- and di-nonylphenyl)phosphite, tris(nonylphenyl)phosphite, 4,4'-isopropylidene bis(phenyl-dialkyl phosphite) and the like.

For the silane coupling agent, there can be used a variety of silane coupling agents such as vinyltriethoxysilane, vinyltris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyltrimethoxysilane, γ-aminopropyltriethoxysilane, N-β-(aminoethyl)-γ-aminopropyltrimethoxysilane and the like.

Besides, various types of additives and stabilizers may be formulated depending on the performance required for adhesive.

The thickness of the adhesive layer 12 is preferably at 1 to 10 µm, more preferably at 3 to 5 µm. If not less than 1 µm, laminate strength as an adhesive is improved. If not larger than 10 µm, a lifting between the base material layer 11 and the aluminum foil layer 14 in an atmosphere of an electrolytic solution can be well suppressed even at the drawn corners of a deep drawn molding.

### (Aluminum foil layer 14)

For an aluminum foil used as the aluminum foil layer 14, ordinarily employed soft aluminum foils can be used. For the purposes of imparting a further resistance to pinhole and ductility during forming, it is preferred to use an aluminum foil containing iron.

The content of iron in the aluminum foil (100 mass%) is preferably at 0.1 to 9.0 mass%, more preferably at 0.5 to 2.0 mass%. If the iron content is not less than 0.1 mass%, the pinhole resistance and ductility are well imparted. If not larger than 9.0 mass%, flexibility becomes good.

The thickness of the aluminum foil layer 14 is preferably at 9 to 200 µm, more preferably at 15 to 100 µm, in view of the barrier properties, pinhole resistance and processability.

From the standpoint of the resistance to electrolytic solution, the aluminum foil layer 14 is preferably made of an aluminum foil having been subjected to defatting treatment.

The defatting treatment can be broadly classified into wet and dry types.

For the wet-type defatting treatment, mention is made of acid defatting and alkali defatting.

The acids used for the acid defatting include, for example, inorganic acids such as sulfuric acid, nitric acid, hydrochloric acid, hydrofluoric acid and the like. These acids may be used singly or in combination of two or more. In order to improve the etching effect of the aluminum foil, these inorganic acids may be formulated with various types of metals salts serving to supply an Fe ion or Ce ion, if necessary.

The alkalis used for the alkali defatting include, for example, sodium hydroxide that is an alkali having high etching effect. Alternatively, materials formulated with weakly alkaline substances or surfactants may also be mentioned.

The wet-type defatting treatment is carried out by an immersion or spraying method.

The dry-type defatting treatment includes a method wherein aluminum is subjected to annealing step. Moreover, mention may also be made of defatting treatments wherein active oxygen is generated according to a flame treatment, a corona treatment or irradiation of UV light with a specified wavelength thereby removing contaminants by oxidative decomposition.

The defatting treatment may be carried out on one surface or both surfaces of the aluminum foil.

### (Corrosion inhibition treatment layer 15)

The corrosion inhibition treatment layer 15 is fundamentally a layer provided so as to inhibit corrosion of the aluminum foil layer 14 with an electrolytic solution or hydrofluoric acid.

For the corrosion inhibition treatment, mention is made of defatting treatment, hot water conversion treatment, anodization treatment, chemical conversion treatment, corrosion inhibition treatment of a coating type wherein a coating agent having anti-corrosion properties is coated, or a combination of two or more of these treatments.

Of these treatments, the defatting treatment, hot water conversion treatment and anodization treatment, particularly the hot water conversion treatment and the anodization treatment, are ones wherein a metal foil (aluminum foil) is dissolved out with a treating agent on the surface thereof to form an aluminum compound (boehmite or alumite) having an excellent corrosion resistance. Accordingly, such treatments may be embraced within the category, in some cases, of chemical conversion treatment because of obtaining a structure wherein a co-continuous structure ranging from the metal foil to the corrosion inhibition treatment layer is formed. The corrosion inhibition treatment layer 15 can be formed only by a pure coating treatment, which is outside the category of chemical conversion treatment, as in a method making use of a coating agent containing a rare earth element oxide sol as will be described hereafter.

For the defatting treatment, acid defatting and alkali defatting can be mentioned. For the acid defatting, mention is made of a method wherein defatting is carried out by use of inorganic acids, such as sulfuric acid, nitric acid, hydrochloric acid and hydrofluoric acid, used singly or in combination, as set out above. When using an acid defatting agent of a fluorine-containing compound, such as ammonium monosodium bifluoride, dissolved in such an inorganic acid as indicated above, the acid defatting enables not only the defatting effect of the metal foil to be attained, but also a metal fluoride in passive state to be formed, thus being effective in view of a resistance to hydrofluoric acid. For the alkali defatting, a method making use of sodium hydroxide is mentioned.

For the hot water conversion treatment, mention is made, for example, of a boehmite treatment wherein a metal foil is immersed in boiling water to which triethanol amine is added.

The anodization treatment includes, for example, an alumite treatment.

For the chemical conversion treatment, mention is made, for example, of a chromate treatment, a zirconium treatment, a titanium treatment, a vanadium treatment, a molybdenum treatment, a calcium phosphate treatment, a strontium hydroxide treatment, a cerium treatment, a ruthenium treatment or a variety of chemical conversion treatments using mixed phases containing materials used in the above treatments.

For those hot water conversion treatment, anodization treatment, and chemical conversion treatment, it is preferred to carry out beforehand such a defatting treatment as set out above. These chemical conversion treatments may be applied not only to the wet type treatment, but also to the coating type by mixing these treating agents with resin components.

The coating agents used in the corrosion inhibition treatment of the coating type wherein a coating agent having corrosion inhibition performance is coated include ones containing at least one selected from the group consisting of rare earth element oxide sols, anionic polymers and cationic polymers. Especially, coating agents containing rare earth element oxide sols are preferably used.

The method of using a coating agent containing a rare earth element oxide sol is a pure coating type of corrosion inhibition treatment. When using this method, it becomes possible to impart a corrosion inhibiting effect to a metal foil by use of any of ordinary coating methods. The layer formed by use of the rare earth element oxide sol has a corrosion inhibiting effect (inhibitor effect) of the metal foil and is a favorable material in an environmental sense.

In the rare earth element oxide sol, fine particles (e.g. particles whose average particle size is 100 nm or below) of a rare earth element oxide is dispersed in a liquid dispersion medium.

The rare earth element oxides are similar to those of the component (B).

Usable liquid dispersion mediums for the rare earth element oxide sol are, for example, a variety of solvents including water, alcohol solvents, hydrocarbon solvents, ketone solvents, ester solvents, ether solvents and the like. Of these, water is preferred.

In order to stabilize the dispersion of the particles of a rare earth element oxide, the rare earth element oxide sol should preferably contain, as a dispersion stabilizer, an inorganic acid such as nitric acid, hydrochloric acid, phosphoric acid or the like, an organic acid such as acetic acid, malic acid, ascorbic acid, lactic acid or the like, or a salt thereof.

Of these dispersion stabilizers, phosphoric acid or a phosphate salt is preferably used. In doing so, there can be expected not only the dispersion stabilization of the particles of rare earth element oxide, but also such effects of improving adhesion with an aluminum foil by utilizing the chelating ability of phosphoric acid in the use of a packaging material for lithium ion cell, imparting a resistance to electrolytic solution by capturing a metal ion (i.e. formation of a passive state film) dissolved out by the influence of hydrofluoric acid, and improving the cohesive force of the rare earth element oxide layer due to the likelihood of causing phosphoric acid to undergo dehydrative condensation even at low temperature.

Phosphoric acid or a phosphate salt used as a dispersion stabilizer includes ones similar to the component (C).

In the rare earth element oxide sol, the amount of phosphoric acid or its salt is preferably at not less than 1 part by mass, more preferably at not less than 5 parts by mass, per 100 parts by mass of the rare earth element oxide. If not less than 1 part by mass, the sol is well stabilized and it becomes easy to satisfy the function as a packaging material for lithium ion cell. The upper limit of phosphoric acid or its salt to be formulated per 100 parts by mass of the rare earth element oxide may be within a range where the function of the rare earth element oxide is not lowered, and is preferably at not larger than 100 parts by mass, more preferably at not larger than 50 parts by mass and much more preferably at not larger than 20 parts by mass per 100 parts by mass of the rare earth element oxide.

In this regard, however, the layer formed of the rare earth element oxide sol is made of an aggregate of inorganic particles, so that the cohesive force of the layer per se is low even after through a dry curing step. To compensate the cohesive force of this layer, it is favorable to complex it with an anionic polymer.

For the anionic polymer, a polymer having a carboxyl group is mentioned and includes, for example, poly(meth)acrylic acid (or its salt) or a copolymer obtained by copolymerizing poly(meth)acrylic acid as a main component.

Copolymerizable components of the copolymer include: alkyl (meth)acrylate monomers (wherein the alkyl group is a methyl group, an ethyl group, an n-propyl group, an i-propyl group, an n-butyl group, an i-butyl group, a t-butyl group, a 2-ethylhexyl group, a cyclohexyl group or the like); (meth)acrylamide, an N-alkyl(meth)acrylamide and N,N-dialkyl(meth)acrylamide (wherein the alkyl group is a methyl group, an ethyl group, an n-propyl group, an i-propyl group, an n-butyl group, an i-butyl group, a t-butyl group, a 2-ethylhexyl group, a cyclohexyl group or the like); an N-alkoxyacrylamide and an N,N-dialkoxy(meth)acrylamide (wherein the alkoxy group is a methoxy group, an ethoxy group, a butoxy group, an isobutoxy group or the like); amide group-containing monomers such as N-methylol(meth)acrylamide, N-phenyl(meth)acrylamide and the like; hydroxyl group-containing monomers such as 2-hydroxyethyl (meth)acrylate, 2-hydroxypropyl (meth)acrylate and the like; glycidyl group-containing monomers such as glycidyl (meth)acrylate, allyl glycidyl ether and the like; silane-containing monomers such as (meth)acryloxypropyltrimethoxysilane, (meth)acryloxypropylethoxysilane and the like; and isocyanate group-containing monomers such as (meth)acryloxypropyl isocyanate and the like. Mention is also made of styrene, α-methylstyrene, vinyl methyl ether, vinyl ethyl ether, maleic acid, an alkyl monomaleate, fumaric acid, an alkyl monofumarate, itaconic acid, an alkyl monoitaconate, (meth)acrylonitrile, vinylidene chloride, ethylene, propylene, vinyl chloride, vinyl acetate, butadiene and the like.

The anionic polymer serves to improve the stability of the corrosion inhibition treatment layer 15 (oxide layer) obtained by use of a rare earth element oxide sol. This is achieved by the effect of protecting the hard, brittle oxide layer with the acrylic resin component and also by the effect of capturing (cation catcher) an ion contaminant (particularly, a sodium ion) derived from phosphoric acid contained in the rare earth element oxide sol. More particularly, if an ion of an alkali metal, particularly sodium, or an alkaline earth metal ion is contained in the corrosion inhibition treatment layer 15 obtained by using the rare earth element oxide sol, the corrosion inhibition treatment layer 15 is apt to be degraded from the origin of an ion-containing portion. Therefore, the sodium ion or the like contained in the rare earth element oxide sol is fixed with the anionic polymer to improve the durability of the corrosion inhibition treatment layer 15.

The corrosion inhibition treatment layer 15 formed of a combination of an anionic polymer and a rare earth element oxide sol has a corrosion inhibition performance similar to a corrosion inhibition treatment layer 15 formed by subjecting an aluminum foil to chromate treatment. The anionic polymer should preferably have such a structure wherein a substantially water-soluble polyanionic polymer is crosslinked.

The crosslinking agent used for the formation of such a structure includes, for example, those compounds having an isocyanate group, a glycidyl group, a carboxyl group or an oxazoline group. Moreover, when a silane coupling agent is used, a crosslink site having a siloxane bond may be introduced.

Compounds having an isocyanate group include, for example, diisocyanates such as tolylene diisocyanate, xylylene diisocyanate or a hydrogenated product thereof, hexamethylenediisocyanate, 4,4'-diphenylmethane diisocyanate or a hydrogenated product thereof, and isophorone diisocyanate; polyisocyanates of these isocyanates such as adducts obtained by reaction with polyhydric alcohols such as trimethylolpropane, burette materials obtained by reaction with water, and isocyanurates in the form of trimers; and blocked polyisocyanates wherein the polyisocyanates are blocked with alcohols, lactams, oximes and the like.

For the compound having a glycidyl group, mention is made, for example, of epoxy compounds obtained by reaction between glycols, such as ethylene glycol, diethylene glycol, triethylene glycol, polyethylene glycol, propylene glycol, dipropylene glycol, tripropylene glycol, polypropylene glycol, 1,4-butanediol, 1,6-hexanediol, neopentyl glycol and the like, and epichlorohydrin, epoxy compounds obtained by reaction between polyhydric alcohols, such as glycerine, polyglycerine, trimethylolpropane, pentaerythritol, sorbitol and the like, and epichlorohydrin, and epoxy compounds obtained by reaction between dicarboxylic acid, such as phthalic acid, terephthalic acid, oxalic acid, adipic acid and the like, and epichlorohydrin.

For the compound having a carboxyl group, a variety of aliphatic or aromatic dicarboxylic acids are mentioned. In addition, poly(meth) acrylic acid and alkali (alkaline earth) metal salts of poly(meth)acrylic acid may also be used.

For the compound having an oxazoline group, in the case where there are used low molecular weight compounds having two or more oxazoline units or polymerizable monomers such as isopropenyloxazoline, mention is made of compounds obtained by copolymerization with acrylic monomers such as (meth)acrylic acid, (meth)acrylic acid alkyl esters, hydroxyalkyl (meth)acrylates and the like.

The silane coupling agent includes γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropylmethoxysilane, γ-aminopropyltriethoxy silane, N-β-(aminoethyl)-γ-aminopropyltrimethoxysilane, and γ-isocyanatepropyltriethoxysilane. In view of the reactivity with an anionic polymer, an epoxysilane, an aminosilane and an isocyanate silane are preferred.

The amount of the crosslinking agent is preferably at 1 to 50 parts by mass, more preferably at 10 to 20 parts by mass, per 100 parts by mass of the anionic polymer. If the ratio of the crosslinking agent is not less than 1 part by mass per 100 parts by mass of the anionic polymer, a crosslinked structure is likely to be well formed. If the ratio of the crosslinking agent is not larger than 50 parts by mass per 100 parts by mass of the anionic polymer, the pot life of the resulting coating solution is improved.

The anionic polymer may be crosslinked by a method wherein not only such a crosslinking agent, but also a titanium or zirconium compound is used to form an ionic crosslinkage. These materials may be applied to a coating composition for forming the undercoat treated layer 13.

With respect to the corrosion inhibition treatment layer 15 set out hereinabove, a corrosion inhibition treatment layer 15 formed by a chemical conversion treatment, typical of which is a chromate treatment, is formed by treating an aluminum foil with a chemical conversion treatment agent, which is formulated particularly with hydrofluoric acid, hydrochloric acid, nitric acid, sulfuric acid or a salt thereof, so as to form an inclined structure with the aluminum foil and subsequently applying with a chromium or non-chromium compound thereby forming a chemical conversion treatment layer on the aluminum foil. However, the use of such an acid as a chemical conversion treatment agent in the chemical conversion treatment entails a poor working environment and the corrosion of a coating apparatus.

On the other hand, the corrosion inhibition treatment layer 15 of the coating type set out above differs from the chemical conversion treatment, typically such as a chromate treatment, in that there is no need of forming an inclined structure relative to the aluminum foil layer 14. Thus, no limitation is placed on the nature of the coating agent with respect to its acidity, alkalinity, neutrality and the like, so that a good working environment can be realized. Additionally, in view of the fact that an alternative solution for the chromate treatment using a chromium compound has been required in the sense of a hygienic environment, the corrosion inhibition treatment layer 15 of the coating type is preferred.

The corrosion inhibition treatment layer 15 may be formed as a laminate structure further stacked with a cationic polymer, if necessary.

For the cationic polymer, mention is made of polyethyleneimines, ion polymer complexes formed of polyethyleneimines and polymers having a carboxylic acid, primary amine-grafted acrylic resins wherein a primary amine is grafted to an acrylic main skeleton, polyallylamine and derivatives thereof, aminophenol resins and the like.

The "polymers having a carboxylic acid" used to form the ion polymer complex include, for example, polycarboxylic acids (or salts), copolymers of polycarboxylic acids (or salts) introduced with comonomers, polysaccharides having a carboxylic acid, and the like. The polycarboxylic acid (or salt) includes, for example, polyacrylic acid or its ion salt. The polysaccharide having a carboxylic acid includes, for example, carboxymethyl cellulose or its ion salt. The ion salt includes an alkali metal salt, an alkaline earth metal salt or the like.

The primary amine-grafted acrylic resin is one wherein a primary amine is grafted to an acrylic main skeleton. For the acrylic main skeleton, mention is made of various monomers used in the acrylic polyols mentioned before, such as poly(meth)acrylic acid and the like. The primary amine grafted to the acrylic main skeleton includes an ethylene imine or the like.

For the polyamine or its derivatives, there can be used homopolymers or copolymers of allylamine, allylamine amide sulfate, diallylamine, dimethylamine and the like. Moreover, these amines may be used in the form of either a free amine or a stabilized substance with acetic acid or hydrochloric acid. Maleic acid, sulfur dioxide and the like may also be used as a copolymerizable component. In addition, some type of polymer wherein a primary amine is partially methoxidized thereby imparting thermal crosslinkability thereto may also be used.

These cationic polymers may be used singly or in combination of two or more.

Of those indicated above, at least one selected from the group consisting of polyallylamine and derivatives thereof is preferred for use as a cationic polymer.

The cationic polymer is preferably used in combination with a crosslinking agent having a functional group capable of reaction with amine/imine, such as a carboxyl group, a glycidyl group or the like.

For the crosslinking agent used in combination with the cationic polymer, there can be used polymers having a carboxylic acid capable of forming an ion polymer complex with polyethyleneimine, for which mention is made, for example, of polycarboxylic acids (salts) such as polyacrylic acid or its ion salt or copolymers introduced with comonomers, and polysaccharides having a carboxyl group such as carboxymethyl cellulose or its salts.

In the practice of the invention, the cationic polymer is described as one constituent element for forming the corrosion inhibition treatment layer 15. The reason for this is that intensive studies have been made wherein a diversity of compounds are used to impart resistances to electrolytic solution and hydrofluoric acid as required for a packaging material for lithium ion cell and, as a result, it has been found that the cationic polymer itself is capable of imparting the resistances to electrolytic solution and hydrofluoric acid. This presumably results from the fact that the fluorine ion is captured with a cationic group (anion catcher) thereby suppressing the damage of the aluminum foil. The cationic polymer is much preferred in view of an improvement in adhesion between the corrosion inhibition treatment layer 15 and the adhesive resin layer 16.

The cationic polymer is soluble in water like the anionic polymer set out before, so that when using the above-indicated crosslinking agent to form a crosslinked structure, the water resistance can be improved. Since a crosslinked structure can also be formed using a cationic polymer as mentioned above, the cationic polymer may be used as a protective layer instead of an anionic polymer with the case where a rare earth element oxide sol has been used for the formation of the corrosion inhibition treatment layer 15.

In view of the above, the instances of the coating types of corrosion inhibition treatments are mentioned below.
(1) Rare earth element oxide sol alone
(2) Anionic polymer alone
(3) Cationic polymer alone
(4) Rare earth element oxide sol + anionic polymer (composite lamination)
(5) Rare earth element oxide sol + cationic polymer (composite lamination)
(6) (Rare earth element oxide sol + anionic polymer: composite lamination)/cationic polymer (multilayering)
(7) (Rare earth element oxide sol + cationic polymer: composite lamination)/anionic polymer (multilayering)

Of these, (1), (4) to (7) are preferred and (4) to (7) are more preferred. In this regard, however, the invention is not limited to the above instances. For an instance of the corrosion inhibition treatment selection, for example, a cationic polymer is a very favorable material in view of its good adhesion to a modified polyolefin resin illustrated with respect to the adhesive resin layer described hereinafter, for which if the adhesive resin layer 16 is formed of a modified polyolefin resin, it is possible to design the provision of a cationic polymer on a surface contacting the adhesive resin layer 16 (e.g. a structure of the instance (5) or (6)).

However, the corrosion inhibition treatment layer 15 is not limited to those layers set out above. For instance, the layer may be formed by use of an agent formulated with phosphoric acid and a chromium compound in a resin binder (such as an aminophenol resin or the like) as with the case of a known coating type of chromate treatment. If such an agent is used, it becomes possible to form a layer having both the corrosion inhibition function and the adhesion.

In order to improve adhesion over those chemical conversion treatment layers (layers formed by defatting treatment, hot water conversion treatment, anodization treatment, chemical conversion treatment or combinations of these treatments), such cationic and anionic polymers as discussed above are subjected to composite treatment, or combinations of these treatments to provide a multilayer structure, thereby enabling the cationic and anionic polymers to be laminated.

Although the stability of a coating solution has to be taken into consideration, the use of a coating agent, obtained by converting the rare earth element oxide sol set out above and a cationic or anionic polymer into a mixed solution beforehand, enables a layer to be formed as having both the corrosion inhibition function and the adhesion.

The mass per unit area of the corrosion inhibition treatment layer 15 is preferably within a range of 0.005 to 0.200 g/m², more preferably within a range of 0.010 to 0.100 g/m². If not less than 0.005 g/m², the aluminum foil layer 14 is readily imparted with the corrosion inhibition function. If the mass per unit exceeds 0.200 g/m², the corrosion inhibition function is saturated and remains substantially unchanged. On the other hand, where a rare earth element oxide sol is used, there is some concern that when a film thickness is large, curing by application of heat during drying becomes insufficient, thereby entailing the lowering of the cohesive force.

It will be noted that although the mass per unit are has been discussed above, the thickness can be calculated therefrom if a specific gravity is known.

### (Adhesive resin layer 16]

The adhesive resin layer 16 is a layer bonding the aluminum foil layer 14 formed on the corrosion inhibition treatment layer 15 and the sealant layer 17 together.

The thermal adhesive resin for the adhesive resin layer 16 includes, for example, a modified polyolefin resin wherein a polyolefin resin is graft-modified with an unsaturated carboxylic acid or its acid anhydride, or an unsaturated carboxylic acid derivative component derived from an ester thereof in the presence of an organic peroxide.

The polyolefin resin includes low density polyethylene, medium density polyethylene, high density polyethylene, an ethylene-α-olefin copolymer, homo, block or random polypropylene, a propylene-α-olefin copolymer or the like.

Among the unsaturated carboxylic acids or their acid anhydrides, or esters thereof used for the graft modification of polyolefin resins, the unsaturated carboxylic acids include acrylic acid, methacrylic acid, maleic acid, fumaric acid, itaconic acid, citraconic acid, tetrahydrophthalic acid, bicyclo[2,2,1]hepto-2-ene-5,6-dicarboxylic acid and the like. The acid anhydrides of the unsaturated carboxylic acids include maleic anhydride, itaconic anhydride, citraconic anhydride, tetrahydrophthalic anhydride, bicyclo[2,2,1]hepto-2-ene-5,6-dicarboxylic anhydride and the like. The unsaturated carboxylic acid esters include methyl acrylate, methyl methacrylate, ethyl methacrylate, butyl methacrylate, dimethyl maleate, monomethyl maleate, diethyl fumarate, dimethyl itaconate, diethyl citraconate, dimethyl tetrahydrophthalate anhydride, dimethyl bicyclo[2,2,1]hepto-2-ene-5,6-dicarboxylate and the like.

The modified polyolefin resin can be prepared by adding 0.2 to 100 parts by mass of the above-mentioned unsaturated carboxylic acid or its acid hydride, or an ester thereof to 100 parts by mass of a polyolefin resin serving as a base material and heating in the presence of a radical initiator. The reaction temperature conditions are generally at 50 to 250°C, preferably at 60 to 200°C. Although the reaction time may depend on the preparation method, it is within a residence time in an extruder of, for example, 2 minutes to 30 minutes, preferably about 5 minutes to 10 minutes, with the case of melt grafting reaction using a biaxial extruder. The modification reaction can be performed under normal or high pressure conditions.

The radical initiator used in the modification reaction includes an organic peroxide. Typical peroxides include alkyl peroxides, aryl peroxide, acryl peroxides, ketone peroxides, peroxyketals, peroxycarbonates, peroxyesters and hydroperoxides, and these organic peroxides can be appropriately selected depending on the temperature conditions and reaction time. With the case of the melt grafting reaction using a biaxial extruder, alkyl peroxides, peroxyketals or peroxyesters are preferred. Especially, ordinarily employed and preferred ones include di-t-butyl peroxide, 2,5-dimethyl-2,5-di-t-butylperoxy-hexine-3, dicumyl peroxide and the like.

Typical of the modified polyolefin resins as indicated above are polyolefins modified with maleic anhydride, including Admer, manufactured by Mitsui Chemicals, Inc., Modic, manufactured by Mitsubishi Chemical Corporation, Adtex, manufactured by Nippon Polyethylene Co., Ltd., and the like.

Such modified polyolefin resins as mentioned above may be further formulated with a thermoplastic elastomer. The modified polyolefin resin is one that imparts adhesiveness by using reactivity between the unsaturated carboxylic derivative component derived from the grafted unsaturated carboxylic acid or its acid anhydride, or an ester thereof and a variety of metals or polymers having various functional groups. Unlike the adhesion through such a reaction as mentioned above, when various types of thermoplastic elastomers are formulated, it becomes possible to release a residual stress occurring during lamination of the graft-modified polyolefin resin and impart an improvement in viscoelastic adhesiveness.

As such a thermoplastic elastomer, preferred ones include Tafmer, manufactured by Mitsui Chemicals, Inc., Zelas, manufactured by Mitsubishi Chemical Corporation, Kyataroi, manufactured by Montel Inc., Notio, manufactured by Mitsui Chemicals, Inc., and styrene elastomers, particularly, hydrogenated styrene elastomers (such as Tuftech, manufactured by AK Elastomer Co., Ltd., Septon/Hybler, manufactured by Kurary Co., Ltd., Dynaron, manufactured by JSR Corporation, Espolex, manufactured by Sumitomo Chemical Co., Ltd., Clayton Polymer, manufactured by Clayton G and the like).

Other various additives may be further formulated, including a flame retardant, an anti-blocking agent, an antioxidant, a light stabilizer, a tackifier and the like.

The thickness of the adhesive resin layer 16 is preferably at 3 to 50 µm, more preferably at 10 to 40 µm. If not less than 3 µm, adhesiveness is improved. At below 50 µm, an amount of moisture transmitted from the end face of a laminate material is improved.

### (Sealant layer 17)

The sealant layer 17 is a layer imparting sealability to the packaging material 1 by heat sealing.

The materials for the sealant layer 17 include, for example, polyolefin resins such as low density polyethylene, medium density polyethylene, high density polyethylene, an ethylene-α-olefin copolymer, homo, block or random polypropylene, a propylene-α-olefin copolymer and the like, an ethylene-vinyl acetate copolymer, an ethylene-(meth)acrylic acid copolymer or an esterified or ion crosslinked product thereof, and the like.

The sealant layer 17 may be in the form of a single layer made of any one of the above-indicated resins or a blend of two or more thereof, or may have a multilayer structure depending on the required performance for the sealant. The multilayer-structured sealant layer 17 includes, for example, a sealant layer of the type wherein there is interposed a resin having gas barrier properties, such as a partially or fully saponified product of an ethylene-vinyl acetate copolymer or a partially or fully saponified product of a polyvinyl acetate copolymer.

### (Fabrication method)

The laminate serving as the packaging material 1 can be fabricated, for example, according to a fabrication process having the following steps (1) to (5).
(1) Step of forming a corrosion inhibition treatment layer 15 by subjecting one surface of an aluminum foil layer 14 to corrosion inhibition treatment.
(2) Step of forming an undercoat treated layer 13 on a side of the aluminum foil layer 14 opposite to the side on which the corrosion treatment layer 15 has been formed.
(3) Step of bonding a base material layer 11 via an adhesive layer 12
   to the side of the aluminum foil layer 14 on which the corrosion inhibition treatment layer 13 has been formed.
(4) Step of bonding a sealant layer 17 via an adhesive resin layer 16 to the side of the aluminum foil layer 14 on which the corrosion inhibition treatment layer 15 has been formed.
(5) Step of thermally treating a laminate comprised of the base material layer 11, adhesive layer 12, undercoat treated layer 13, aluminum foil layer 14, corrosion inhibition treatment layer 15, adhesive resin layer 16 and sealant layer.

### Step 1:

The corrosion inhibition treatment layer 15 can be formed by subjecting one surface of the aluminum foil layer 14 (i.e. a surface opposite to the surface on which the undercoat treated layer 13 is formed) to corrosion inhibition treatment.

The corrosion inhibition treatment is just as set forth before. More particularly, mention is made of defatting treatment, hot water conversion treatment, anodization treatment, chemical conversion treatment, a coating type of corrosion inhibition treatment wherein a coating agent having corrosion inhibition performance is coated, and the like.

The defatting treatment includes annealing, a spraying method, an immersion method or the like.

For the hot water conversion treatment and anodization treatment methods, an immersion method is mentioned.

For the chemical conversion treatment, an immersion method, a spraying method, a coating method and the like can be selected depending on the type of chemical conversion treatment.

For the coating method of a coating agent having a corrosion inhibition performance, there can be adopted a variety of methods such as of gravure coating, reverse coating, roll coating, bar coating and the like.

The coating amount of the coating agent having a corrosion inhibition performance is preferably within a range satisfying the mass per unit area of the corrosion inhibition treatment layer 15 as defined before. If dry curing is needed, it can be carried out within a matrix temperature of 60 to 300°C although depending on the drying conditions of the corrosion inhibition treatment layer 15 used.

### Step (2):

The undercoat treated layer 13 can be formed by forming and curing a layer containing the resin (A1), resin (A2), component (B) and component (C).

This layer can be formed by coating and drying a coating composition containing the above components and a liquid medium.

On this occasion, these components may be all formulated in one coating composition, or may be formulated in different coating compositions. For example, a coating composition containing the resin (A1) and resin (A2) and a coating composition containing the component (B) and component (C) are separately prepared, and these coating compositions can be successively coated and dried to form a layer containing the resin (A1), resin (A2), component (B) and component (C).

For the liquid medium, various types of solvents may be used including, for example, water, an alcohol solvent, a hydrocarbon solvent, a ketone solvent, an ester solvent, an ether solvent and the like. Of these, water is preferred. The amount of the liquid medium is not critical if it is within a range sufficient to permit the resulting composition to be coated.

For the coating of the coating composition, a number of coating techniques can be adopted including gravure coating, gravure reverse coating, roller coating, reverse roll coating, micro gravure coating, comma coating, air knife coating, mayer bar coating, dip coating, die coating, spray coating and the like.

The drying and curing (dry curing) of the layer is preferably carried out in such a way that the matrix temperature is within a range of 80 to 250°C.

In this regard, however, if the step (5) is effected, the resin (A1) and the resin (A2) may not form a crosslinked resin (component (A)) at the time of completion of the step (2).

### Step (3):

For a method of bonding the base material layer 11 via the adhesive layer 12 to the side of the aluminum foil layer 14, on which the undercoat treated layer 13 has been formed, there can be adopted known techniques such as of dry lamination, non-solvent lamination, wet lamination and the like. Of these, the use of the dry lamination technique is preferred.

Preferred adhesives forming the adhesive layer 12 include polyurethane adhesives illustrated before with respect to the adhesive layer 12.

The dry coating amount of the adhesive is preferably at 1 to 10 g/m², more preferably at 3 to 7 g/m².

After the bonding, an aging (aging) treatment may be performed within a range of room temperature to 100°C so as to promote adhesion.

### Step (4):

For a method of bonding the sealant layer 17 via the adhesive resin layer 16 over the aluminum foil layer 14 at the side of the corrosion inhibition treatment layer 15, there can be adopted known techniques such as of sand lamination, co-extrusion and the like. For instance, when sand lamination making use of an extrusion laminator is carried out, there can be formed a layer structure of base material layer 11/adhesive layer 12/undercoat treated layer 13/aluminum foil layer 14/corrosion inhibition treatment layer 15/adhesive resin layer 16/sealant layer 17. The adhesive resin layer 16 and the sealant layer 17 may be formed by co-extrusion.

The extrusion temperature of the adhesive resin layer 16 is preferably at 200 to 340°C.

### Step (5):

When the laminate formed according to the steps (1) to (4) (i.e. base material layer 11/adhesive layer 12/undercoat treated layer 13/aluminum foil layer 14/corrosion inhibition treatment layer 15/adhesive resin layer 16/sealant layer 17) is subjected to thermal treatment, the adhesion between adjacent layers can be improved, along with improvements in resistances to electrolytic solution and hydrofluoric acid.

For the thermal treatment method, mention is made of a method wherein the laminate is stored in an aging furnace, a method of bringing the laminate into intimate contact with thermocompression rolls, a method of winding the laminate about a thermal drum, and a method of passing the laminate through an annealing furnace.

The thermal treatment temperature is preferably so set that the maximum arrival temperature of the laminate is at 40°C to 220°C and is more preferably set at 80°C to 200°C. Although the treating time depends on the treating temperature, it is preferred to effect the treatment at a lower temperature for a longer time or at a higher temperature for a shorter time.

The fabrication method of the laminate serving for the packaging material 1 is not limited to those methods set out above.

For instance, the step (1) may be carried out after the step (2). In the step (1), the corrosion inhibition treatment layer may be formed on opposite surfaces of the aluminum foil layer, followed by forming the undercoat treated layer 13 on one surface of the corrosion inhibition treatment layer in the step (2).

Moreover, the step (3) may be carried out after the step (4).

The method may be performed without carrying out the step (5).

After the step (5) or after the step (4), there may be added, if necessary, a step of coating at least one of a slipping material and an anti-blocking material on at least one of an outermost layer and an innermost layer of the resulting laminate. The coating of at least one of the slipping material and anti-blocking material can contribute to lowering of the coefficient of static friction, thereby improving molding performance.

The at least one of the slipping agent and anti-blocking agent is preferably dissolved or dispersed in a solvent and coated. The coating can be carried out by known coating techniques.

### [Second embodiment]

Next, the second embodiment of the packaging material of the invention is now described. It will be noted that in this embodiment, constituent elements corresponding to those of the first embodiment are designated by like reference numerals and detailed description thereof is omitted.

Fig. 2 is a schematic sectional view of a laminate serving to form a packaging material 2 according to the second embodiment of the invention.

The packaging material 2 is comprised of a laminate wherein a base material layer 11 has an adhesive layer 12, an adhesion improving layer 18, an undercoat treated layer 13, an aluminum foil layer 14, a corrosion inhibition treatment layer 15, an adhesive resin layer 16 and a sealant layer 17 formed successively on one surface thereof.

That is, the packaging material 2 is the same as the packaging material 1 except that the adhesion improving layer 18 is provided.

### (Adhesion improving layer 18)

The adhesion improving layer 18 serves to enhance the adhesion between the base material layer 11 and the aluminum foil layer 14 by improving the adhesiveness between the undercoat treated layer 13 and the adhesive layer 12.

The adhesion improving layer 18 is constituted of a crosslinked resin wherein there is crosslinked at least one basic resin selected from the group consisting of a polyethyleneimine, a ion polymer complex made of a polyethylene imine and a polymer having a carboxylic acid, a primary amine-grafted acrylic resin, polyallylamine and derivatives of these resins, and an aminophenol resin.

For the "polymer having a carboxylic acid" forming the ion polymer complex among the above basic resins, mention is made, for example, of polycarboxylic acids (salts), copolymers introduced with comonomers into the polycarboxylic acids (salts), polysaccharides having a carboxylic group and the like. Examples of the polycarboxylic acid (salt) include polyacrylic acid or its ion salt. The polysaccharides having a carboxyl group include, for example, carboxymethyl cellulose or its ion salt. The ion salts include alkali metal salts, alkaline earth metal salts and the like.

The primary amine-grafted acrylic resin is a resin wherein a primary amine is grafted to the acrylic main skeleton. The acrylic main skeleton includes poly(meth)acrylic acid or various types of monomers used for the afore-indicated acrylic polyols. The primary amine to be grafted to the acrylic main skeleton includes ethyleneimine or the like.

For the polyallylamine or its derivatives, there may be used homopolymers or copolymers of allylamine, an allylamineamide sulfate salt, diallyamine, dimethylallylamine and the like. Further, these amines may be used in the form of a free amine or a stabilized one with acetic acid or hydrochloric acid. Still further, there may be used maleic acid, sulfur dioxide or the like as a copolymerizable component. Additionally, such a type of polymer wherein a primary amine is partially methoxidized to impart thermal crosslinkability thereto may also be used.

These basic resins may be used singly or in combination or two or more.

Of the basic resins, at least one selected from the group consisting of polyallylamine and its derivatives is preferred.

In the adhesion improving layer 18, the basic resin is crosslinked to form a crosslinked resin. This leads to improvements in the adhesion between the base material layer 11 and the aluminum foil layer 14 and also in water resistance over the case of no crosslinking.

For the crosslinking of the basic resin, known methods may be used including, for example, a method making use of a crosslinking agent. For instance, the adhesion improving layer 18 can be formed by coating, onto the aluminum foil layer 14, a coating composition containing a basic resin, a crosslinking agent capable of crosslinking the basic resin and a solvent such as water and dry curing.

The crosslinking agent for crosslinking a basic resin preferably includes a compound having two or more functional groups capable of reaction with an amine or imine. Such a functional group includes, for example, a carboxyl group, a glycidyl group or the like.

Examples of the compound having two or more glycidyl groups include: epoxy compounds obtained by reaction between glycols, such as ethylene glycol, diethylene glycol, triethylene glycol, polyethylene glycol, propylene glycol, dipropylene glycol, tripropylene glycol, polypropylene glycol, 1,4-butanediol, 1,6-hexanediol, neopentyl glycol and the like, and epichlorohydrin; epoxy compounds obtained by reaction between polyhydric alcohols, such as glycerine, polyglycerine, trimethylolpropane, pentaerythritol, sorbitol and the like, and epichlorohydrin; epoxy compounds obtained by reaction between dicarboxylic acids, such as phthalic acid, terephthalic acid, oxalic acid, adipic acid and the like, and epichlorohydrin; and the like.

The compounds having two or more carboxylic groups include a diversity of aliphatic or aromatic dicarboxylic acids. For the compound having a carboxyl group, polymers having a carboxylic acid may also be used. Such polymers include those polymers having a carboxylic acid and forming ion polymer complexes as set out before.

The crosslinking agents may be used singly or in combination of two or more.

The amount of the crosslinking agent relative to the basic resin is preferably at 5 to 100 parts by mass, more preferably at 10 to 50 parts by mass, per 100 parts by mass of the basic resin. If not less than 5 parts by mass, a crosslinked structure is well formed and thus, a significant effect of improving the adhesion, water resistance, humidity resistance and the like can be obtained. Over 100 parts by mass, there may be concern that the pot life of the coating solution lowers.

It is to be noted that where a crosslinking agent is used for crosslinking a basic resin, an unreacted crosslinking agent, which may be left in the adhesion improving layer, is out of question.

The adhesion improving layer 18 is preferably provided in such a way that the total thickness of the adhesion improving layer 18 and the undercoat treated layer 15 is at 0.001 µm to 1 µm as a final dry coating thickness. If the adhesion improving layer 18 is provided to make the total thickness at not less than 0.001 µm, excellent adhesiveness is likely to be obtained. Moreover, if the adhesion improving layer 18 is provided so that the total thickness exceeds 1 µm, the adhesion performance is saturated and little improvement is expected. If the adhesion improving layer 18 is provided so as to make the total thickness at not larger than 1 µm, not only moldability is improved, but also the dry curing step becomes easy and productivity is improved because the heat quantity necessary for the crosslinking reaction does not become excessive.

### (Fabrication method of a laminate)

The laminate serving as the packaging material 2 can be fabricated in the same manner as in the fabrication method illustrated, for example, as the fabrication method of the laminate for the packaging material 1 except that after the formation of the undercoat treated layer 13 on the aluminum foil layer 13 in the step (1), an adhesion improving layer 18 is further formed on the undercoat treated layer 13.

For a method of forming the adhesion improving layer 18 on the undercoat treated layer 13, mention is made of a method wherein a coating composition containing such a basic resin as illustrated before, a crosslinking agent for crosslinking the basic resin and a solvent is coated onto the undercoat treated layer 13, followed by dry curing.

For the coating method of the coating composition, there can be adopted various coating technologies including gravure coating, gravure reverse coating, roll coating, reverse roll coating, micro gravure coating, comma coating, air knife coating, mayer bas coating, dip coating, die coating, spray coating and the like.

The dry curing is preferably carried out at a matrix temperature within a range of 60 to 200°C.

### (Third embodiment)

Next, the third embodiment of a packaging material of the invention is described. It will be noted that in this embodiment, constituent elements corresponding to those of the first embodiment are designated by same reference numerals and detailed description thereof is omitted.

Fig. 3 is a schematic sectional view of a laminate used for a packaging material according to a third embodiment of the invention.

A packaging material 3 is constituted of a laminate having an adhesive layer 12 (first adhesive layer), an undercoat treated layer 13, an aluminum foil layer 14, a corrosion inhibition treatment layer 15, an adhesive layer 19 (second adhesive layer), and a sealant layer 17 successively laminated on one surface of a base material layer 11.

That is, the packaging material is same as the packaging material 1 except that the adhesive layer 19 is used instead of the adhesive resin layer 16.

### (Adhesive layer 19)

The adhesive layer 19 is a layer of bonding the aluminum foil layer 14, on which the corrosion inhibition treatment layer 15 has been formed, and the sealant layer 17 together like the adhesive resin layer 16. The bonding between the aluminum foil layer 14 and the sealant layer 17 by means of the adhesive resin layer 16 is suited mainly for thermal lamination, whereas the bonding with the adhesive layer 19 can be readily applied for dry lamination as well.

The adhesive forming the adhesive layer 19 includes ones similar to those mentioned with respect to the adhesive layer 12. For instance, mention is made of polyurethane adhesives containing a main agent made of a polyol such as a polyester polyol, a polyether polyol, an acrylic polyol, a carbonate polyol or the like, and a curing agent made of an isocyanate compound having a bi- or higher function. As a main agent, there may be used, aside from the above-indicated polyols, a solution of an acid-modified polyolefin dissolved or dispersed in a solvent. In this case, a usable curing agent may include such isocyanate compounds, carbodiimide compounds and epoxy compounds as mentioned hereinbefore.

The formulation of the adhesive for forming the adhesive layer 19 (e.g. types and formulation amounts of main agent and polyisocyanate curing agent in the polyurethane adhesive) may be same as or different from an adhesive agent for forming the adhesive layer 12.

In this regard, however, the adhesive used for the adhesive layer 19 is one serving to bond the faces brought into contact with an electrolytic solution charged, so that care should be paid to swelling with an electrolytic solution and hydrolysis with hydrofluoric acid. Thus, it is preferred to use an adhesive making use of a main agent having a skeleton unlikely to be hydrolyzed or an adhesive wherein crosslinking density is improved.

For example, the technique of improving the crosslinking density of a polyester polyol adhesive composition includes the use, as a polybasic acid, of a dimer fatty acid or its ester or a hydrogenated product, or a reduced glycol of a diameter fatty acid or its ester or a hydrogenated product thereof. The dimer fatty acid is obtained by dimerizing various types of unsaturated fatty acids and its structure includes those of an acyclic type, a monocyclic type, a polycyclic type and an aromatic ring type. The polybasic acid, which is a starting material for the polyester polyol used in this adhesive, is not limited to any specific type and thus, there can be appropriately used monounsaturated fatty acids, di-unsaturated fatty acids, tri-unsaturated fatty acids, tetra-unsaturated fatty acids, penta-unsaturated fatty acids, hexa-unsaturated fatty acids and the like. Examples of the monounsaturated fatty acid include crotonic acid, myristoleic acid, palmitoleic acid, oleic acid, elaidic acid, vaccenic acid, gadoleic acid, eicosenoic acid, erucic acid, nervonic acid and the like. The di-unsaturated acid includes linoleic acid, eicosadienoic acid, docosadienoic acid or the like. The tri-unsaturated acid includes linolenic acid, Binoren acid, eleostearic acid, Mead acid, dihomo-γ-linolenic acid, eicosatetraenoic acid or the like. The tetra-unsaturated acid includes stearidonic acid, arachidonic acid, eicosatetraenoic acid, adrenic acid or the like. The penta-unsaturated acid includes bosseopentaenoic acid, eicosapentaenoic acid, Osbond acid, clupanodonic acid, tetracosapentaenoic acid or the like. The hexa-unsaturated fatty acid includes docosahexaenoic acid, nisinic acid or the like. When the unsaturated fatty acids are dimerized, any combination of unsaturated fatty acids may be used. The bulky hydrophobic unit of the resulting dimer fatty acid contributes to improving the crosslinking density on use as adhesive.

While using such a dimer fatty acid as an essential component, dibasic acids used for ordinary polyester polyols may also be introduced. The dibasic acid may be selected from aliphatic acids such as succinic acid, glutaric acid, adipic acid, pimelic acid, suberic acid, azelaic acid, sebacic acid, brassylic acid and the like, and aromatic acids such as isophthalic acid, terephthalic acid, naphthalenedicarboxylic acid and the like.

For the adhesive forming the adhesive layer 19, a polyurethane adhesive containing a polyester polyol is preferred as a main agent. Preferable components for use as the polyester polyol include those components obtained by using at least one of aliphatic diols, such as ethylene glycol, propylene glycol, butanediol, neopentyl glycol, methylpentanediol, hexanediol, heptanediol, octanediol, nonanediol, decanediol, dodecanediol and the like, alicyclic diols such as cyclohexanediol, hydrogenated xylylene glycol and the like, and aromatic diols such as xylylene glycol and the like. Mention is further made of polyester polyols obtained by subjecting the hydroxyl group at opposite terminals of a polyester polyol to chain elongation with an isocyanate compound, or an adduct, a burette form or an isocyanurate of an at least one isocyanate compound. Examples of the isocyanate compound include 2,4- or 2,6-tolylene diisocyanate, xylylene diisocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, isopropylidenedicyclohexyl-4,4'-diisocyanate and the like. The isocyanate components described hereinafter may also be used as a chain elongation agent of the polyester polyol.

For the curing agent for the above main agent, there may be used isocyanate compounds of such a type as used for the chain elongation agent of the polyester polyol. Although indicated above, the isocyanate compound includes an isocyanate compound itself selected from 2,4- or 2,6-tolylene diisocyanate, xylylene diisocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, isopropylidenedicyclohexyl-4,4'-diisocyanate and the like, or an adduct, a burette form or an isocyanurate made of at least one isocyanate selected from those isocyanate compounds indicated above. Moreover, for the purpose of improving an electrolytic solution resistance (especially, solubility in or swellability with an electrolytic solution), it is effective to use a polyisocyanate itself selected from crude tolylene diisocyanate and crude (or polymeric) diphenylmethane diisocyanate or a mixture thereof, or an adduct thereof. The use of these curing agents not only leads to improved solubility or swellability by an improvement in crosslinking density of the adhesive film, but also leads to an increased concentration of a urethane group, for which an improvement in adhesion between the corrosion inhibition treatment layer 15 and the sealant layer 17 is expected. The crude tolylene diisocyanate or crude (or polymeric) diphenylmethane diisocyanate used as a chain elongation agent of the polyester polyol is favorable for use as a packaging material for lithium ion cell.

The amount of the curing agent is preferably at 1 to 100 parts by mass, more preferably at 5 to 50 parts by mass. If less than 1 part by mass, there is concern that performance is not developed with respect to adhesion and an electrolytic solution resistance. If larger than 100 parts by mass, the isocyanate group becomes excessive, with some concern that an unreacted compound is left, giving an influence on the quality and hardness of the adhesive film.

In order to further promote adhesion, the polyurethane adhesive may be formulated with a carbodiimide compound, an oxazoline compound, an epoxy compound, a phosphorus compound, a silane coupling agent or the like. Specific examples of these compounds are same as those indicated hereinbefore, respectively.

Besides, various types of additives or stabilizers may be formulated depending on the performance required for the adhesive.

The thickness of the adhesive layer 19 is preferably at 1 to 10 µm, more preferably at 3 to 5 µm. If not less than 1 µm, the electrolytic solution resistance and laminate strength are improved. If not large than 10 µm, an amount of moisture transmitted through end faces of a laminate is improved.

### (Fabrication method of laminate)

The laminate for the packaging material 3 can be made, for example, by carrying out the following step (4') instead of the step (4) in the fabrication process illustrated as the fabrication method of a laminate for the packaging material 1.
(4') Step of bonding the sealant layer 17 via the adhesive layer 19 on the corrosion inhibition treatment layer 15 over the side of the aluminum foil 14.

### Step (4'):

For bonding the sealant layer 17 via the adhesive layer 19 on the corrosion inhibition treatment layer 15 over the side of the aluminum foil layer 14, there can be adopted a method similar to the method of bonding the base material layer 11 via the adhesive layer 12 on the undercoat treated layer 13 over the side of the aluminum foil layer 14 as illustrated with respect to the step (3).

The first to third embodiments have been hereinabove described to illustrate the packaging materials of the invention and should not be construed as limiting the invention to these embodiments.

For instance, in the packaging materials 1, 3 according to the first and third embodiments, the adhesion improving layer 18 may be provided between the adhesive layer 12 and the undercoat treated layer 13 like the packaging material of the second embodiment.

Since the undercoat treated layer is provided at a position of the aluminum foil layer close to the base material layer, the packaging materials according to the embodiments of the invention ensure excellent adhesion between the base material layer and the aluminum foil layer without provision of a chemical conversion treatment layer formed such as by a conventional chromate treatment and have thus excellent deep drawing moldability.

If a chemical conversion treatment layer is formed, there may be some concern that some type of material for a coating agent used for chemical conversion treatment is harmful to the environment. The packaging materials according to the embodiments of the invention make no use of any harmful material in the undercoat treated layer and is thus advantageous in environments such as a natural environment and a working environment. Additionally, where the corrosion inhibition treatment layer is not a layer formed by chemical conversion treatment, but is of a type formed by a coating treatment, there is obtained an excellent packaging material for lithium ion cell, which makes use of environmentally favorable materials on opposite surfaces of the aluminum foil layer.

The packaging materials according to the embodiments of the invention can be used for the fabrication of lithium ion cells.

The form of the lithium ion cell using the packaging materials of the embodiments of the invention is not specifically limited so far as part or all of the enclosure is formed of the laminate film, and known forms may be adopted. In view of the utility of the invention, part or all of the enclosure is preferably formed of an article formed by cold forming.

In such applications as mentioned above, the packaging materials according to the embodiments may be articles formed by cold forming. In the cold forming, usual practice is to form a recess accommodating a cell (anode, separator, cathode). The cold forming is a forming method carried out at normal temperatures and includes, for example, a press forming such as deep drawing forming, stretch forming or the like.

The lithium ion cell using the packaging material according to the embodiment of the invention can be fabricated by known fabrication methods.

### Examples

Examples are shown to illustrate the invention in detail. In this regard, however, the invention should not be construed as limited to the examples.

The materials used in the respective examples and the methods of evaluating the packaging materials made therein are as follows.

### <Materials used>

### [Undercoat treated layer 13]

A coating composition for the formation of an undercoat treated layer was prepared by use of the following components (A) to (F) to provide undercoat treating agents BL-1-1 to BL-1-5, BL-2 to BL-6.
{Component A}
   (A-1): Acrylic-isopropenyl oxazoline copolymer (water-soluble, oxazoline group-containing acrylic resin with 4.5 mmol/g of an oxazoline group-containing monomer, manufactured by Nippon Shokubai Co., Ltd.)
   (A2-1): Ammonium salt of poly(acrylic acid-hydroxyethyl methacrylate) copolymer (ammonium salt of water-soluble poly(meth)acrylic acid, manufactured by Toagosei Co., Ltd.)
   (A1-2): Polyallylamine (manufactured by Nittobo Co., Ltd.)
   (A2-2): Polyglycerol polyglycidyl ether (manufactured by Nagase ChemteX Corporation)
{Component B}
   (B-1): Cerium oxide
{Component C}
   (C-1): Sodium hexametaphosphate
{Component E}
   (E-1): γ-Aminopropyltrimethoxysilane
{Component F}
   (F-1): Ammonium zirconium carbonate

Undercoat treatment agent BL-1-1: Composition wherein a mixture of 22.5 mass% of (A2-1), 1.25 mass% of (A1-1), 75 mass% of (B-1) and 1.25 mass% of (C-1) was adjusted to a solid concentration of 5 mass% by use of distilled water as a solvent.
Undercoat treatment agent BL-1-2: Composition wherein a mixture of 9.3 mass% of (A2-1), 0.5 mass% of (A1-1), 82 mass% of (B-1) and 8.2 mass% of (C-1) was adjusted to a solid concentration of 5 mass% by use of distilled water as a solvent.
Undercoat treatment agent BL-1-3: Composition wherein a mixture of 0.86 mass% of (A2-1), 0.04 mass% of (A1-1), 90 mass% of (B-1) and 10 mass% of (C-1) was adjusted to a solid concentration of 5 mass% by use of distilled water as a solvent.
Undercoat treatment agent BL-1-4: Composition wherein a mixture of 47 mass% of (A2-1), 3 mass% of (A1-1), 45 mass% of (B-1) and 5 mass% of (C-1) was adjusted to a solid concentration of 5 mass% by use of distilled water as a solvent.
Undercoat treatment agent BL-1-5: Composition wherein a mixture of 0.09 mass% of (A2-1), 0.01 mass% of (A1-1), 90 mass% of (B-1) and 9 mass% of (C-1) was adjusted to a solid concentration of 5 mass% by use of distilled water as a solvent.

Undercoat treatment agent BL-2: Composition wherein 10 parts by mass of (C-1) per 100 parts by mass of (B-1) was formulated and its solid concentration was adjusted to a solid concentration of 10 mass% by use of distilled water as a solvent (sodium polyphosphate-stabilized cerium oxide sol).
Undercoat treatment agent BL-3: Composition wherein a mixture of 90 mass% of (A2-1) and 10 mass% of (A1-1) was adjusted to a solid concentration of 5 mass% by use of distilled water as a solvent.
Undercoat treatment agent BL-4: Composition wherein (E-1) was added to BL-1-1 in an amount of 1 part by mass per 100 parts by mass of the total of (A2-1) and (A1-1).
Undercoat treatment agent BL-5: Composition wherein (F-1) was added to BL-1-1 in an amount of 1 part by mass of (F-1), calculated as the metal (i.e. calculated as an amount of zirconium), per 100 parts by mass of the total of (A2-1) and (A1-1).
Undercoat treatment agent BL-6: Composition wherein a mixture of 90 mass% of (A2-2) and 10 mass% of (A1-2) was adjusted to a solid concentration of 5 mass% by use of distilled water as a solvent.

Of these, the undercoat treatment agents BL-1-1 - BL-1-5 were those treatment agents obtained by changing the formulation ratios of (A2-1), (A1-1), (B-1) and (C-1). The ratios (mass%) of the respective components relative to the total solid content (the total of all the components except for solvent) of individual undercoat treatment agents, and the total parts by mass of the components (B) and (C) (((B+C)/A) relative to 100 parts by mass of the component (A) are collectively shown in Table 1.

**Table 1**

| | Formulation (mass%, relative to total solid content) | | | | (B+C)/A (parts by mass) |
|---|---|---|---|---|---|
| | Component (A) | | Component (B) | Component (C) | |
| | (A2-1) | (A1-1) | (B-1) | (C-1) | |
| BL-1-1 | 22.5 | 1.25 | 75 | 1.25 | 321 |
| BL-1-2 | 9.3 | 0.5 | 82 | 8.2 | 920 |
| BL-1-3 | 0.85 | 0.04 | 89.20 | 9.91 | 11136 |
| BL-1-4 | 47 | 3 | 45 | 5 | 100 |
| BL-1-5 | 0.09 | 0.01 | 90.82 | 9.08 | 99900 |

### [Base material layer 11]

Base material SB-1: Biaxially stretched polyamide film having a thickness of 25 µm (manufactured by Unitika Ltd.)

### [Adhesive layer 12]

Adhesive AD-1: Polyurethane adhesive made of a polyester polyol main agent formulated with a tolylene diisocyanate adduct curing agent (manufactured by Toyo Ink Co., Ltd.)

### [Aluminum foil layer 14]

Aluminum foil AL-1: Annealed, defatted soft aluminum foil 8079 material having a thickness of 40 µm (manufactured by Toyo Aluminum K.K.)

### [Corrosion inhibition treatment layer 15]

Treating agent CL-1: Sodium polyphosphate-stabilized cerium oxide sol obtained by formulating 10 parts by mass of sodium phosphate in 100 parts by mass of cesium oxide, followed by adjusting a solid concentration to 10 mass% by use of distilled water as a solvent.

Treating agent CL-2: Composition wherein a mixture of 90 mass% of ammonium polyacrylate (manufactured by Toagosei Co., Ltd.) and 10 mass% of acrylic-isopropenyl oxazoline copolymer (manufactured by Nippon Shokubai Co., Ltd.) was adjusted to a solid concentration of 5 mass% by use of distilled water as a solvent.

Treating agent CL-3: Composition wherein a mixture of 90 mass% of polyallylamine (manufactured by Nitto Boseki Co., Ltd.) and 10 mass% of polyglycerol polyglycidyl ether (manufactured by Nagase ChemteX Corporation) was adjusted to a solid concentration of 5 mass% by use of distilled water as a solvent.

Treating agent CL-4: Composition wherein a mixture of 90 mass% of polyethyleneimine (manufactured by Nitto Boseki Co., Ltd.) and 10 mass% of polyglycerol polyglycidyl ether (manufactured by Nagase ChemteX Corporation) was adjusted to a solid concentration of 5 mass% by use of distilled water as a solvent.

Treating agent CL-5: Chemical conversion treating agent wherein chromium fluoride (CrF₃) was added to a water-soluble phenolic resin (manufactured by Sumitomo Bakelite Co., Ltd.) whose solid concentration was adjusted to 1 mass% by use of a 1 mass% aqueous phosphoric solution as a solvent, in such a way that an amount of Cr present in a final dry film was made at 10 mg/m².

### [Adhesive resin layer 16]

Adhesive resin AR-1: Modified polyolefin resin (manufactured by Mitsui Chemicals, Inc.) obtained by formulating a rubber component (elastomer phase) in modified random polypropylene (PP), which was obtained by graft-modifying PP with maleic anhydride.

### [Sealant layer 17]

Film SL-1: Multilayer film made of three layers of two types of PPs in the form of random PP/block PP/random PP with a total thickness of 30 µm (manufactured by Okamoto).

### [Adhesion improving layer 18]

Treating agent D-1: Composition wherein a water-soluble, low-molecular-weight glycidyl compound was adjusted to a solid concentration of 0.5 mass% by use of distilled water as a solvent.

Treating agent D-2: Composition wherein water-soluble polyallylamine was adjusted to its solid concentration of 0.5 mass% by use of distilled water as a solvent.

### [Adhesive layer 19]

Adhesive A-1: Adhesive wherein a tolylene diisocyanate adduct curing agent was formulated in a polyester polyol main agent.

Adhesive A1-2: Adhesive wherein a tolylene diisocyanate adduct curing agent was formulated in an acid-modified polyolefin main agent.

Adhesive A1-3: Adhesive wherein a tolylene diisocyanate adduct curing agent and a glycidyl silane were formulated in an acid-modified polyolefin main agent.

Adhesive Al-4: Adhesive wherein a carbodiimide curing agent was formulated in an acid-modified polyolefin main agent.

Adhesive A1-5: Adhesive wherein an epoxy-based curing agent was formulated in an acid-modified polyolefin main agent.

In the examples, an organosilane, which was able to form the undercoat treated layer 13 most stably, was used as the component (E). As to the component (F), the effectiveness was tested by limitation only to a zirconium compound capable of most stably forming the undercoat treated layer 13.

### <Evaluation methods>

### [Evaluation of moldability (1)]

Using the packaging materials obtained in the respective examples and a cold forming mold having a size of 50 x 30 mm and a drawing depth of 5.0 mm, cold-formed samples were made. The sample was sealed by heat sealing (sealing conditions: a temperature of 190°C, a pressure of 0.3 Ma and a time of 3 seconds) in the form of a deep-drawn molding 101 shown in Fig. 4. On this occasion, heat sealing bars were brought into contact with the vicinity of the corners (i.e. regions a of Fig. 4) of the cold-formed sample so that the heat of the sealing was directly applied to the corners, under which the presence or absence of lifting between the base material layer 11 and the aluminum foil layer 14 was evaluated. This evaluation involved a possible evaluation content when a cell maker encapsulated a cell serving as a heart of cell and thus, was made according to the following judgment standards.
O (good): No lifting visually observed
X (poor): Lifting visually observed

### [Evaluation of moldability (2)]

As in the evaluation of moldability (1), using the packaging materials obtained in the respective examples and a cold forming mold having a size of 50 x 30 mm and a drawing depth of 5.0 mm, cold-formed samples were made. The samples were stored under conditions of any of 85°C and 4 hours, 100°C and 4 hours or 100°C and one week, after which lifting between the base material layer 11 and the aluminum foil layer 14, especially, at the deep-drawn recess was evaluated. The evaluation was made according to the following standards.
⊕ (excellent): No lifting observed after storage at 100°C for 1 week
○ (good): No lifting observed after storage at 100°C for 4 hours
Δ (poor): No lifting observed after storage at 85°C for 4 hours
X (bad): Lifting observed after storage at 85°C for 4 hours

### [Overall evaluation]

The overall evaluation was made according to the following standards.

"Acceptable": Both Evaluation of moldability (1) and Evaluation of moldability (2) were free of "X".

"Not acceptable": At least one of Evaluation of moldability (1) and Evaluation of moldability (2) was judged as "X".

### [Examples 1 to 13]

Packaging materials having such a layer structure as shown in Fig. 1 or Fig. 2 were made according to the following procedure.

### Step (1):

A treating agent shown in Table 2 was coated onto an aluminum foil layer 14 (aluminum foil AL-1) at a side where an electrolytic solution was to be filled and dried to form a corrosion inhibition treatment layer 15.

Where the corrosion inhibition treatment layer 15 was made of a multilayer, it was formed successively from a first layer in Table 2. For instance, with Example 1, CL-1 was coated and dried, and CL-2 was subsequently coated and dried, followed by further coating and drying CL-3 to form a corrosion inhibition treatment layer 15.

The coating of the treating agent was carried out by micro gravure coating. The amount of the treating agent was set at a final dry coating amount of 70 to 100 mg/m² in the case of the corrosion inhibition treatment layer 15 being in the form of either a single layer or a multilayer. The drying after the coating (baking treatment) was carried out in a drying unit at 150 to 250°C depending on the type of coating agent.

### Step (II):

An undercoat treated layer indicated in Table 2 was coated on a surface of the aluminum foil layer 14 opposite to the side where the corrosion inhibition treatment layer had been formed, and dried to form an undercoat treated layer 13 (with a thickness of 0.030 µm).

Where the undercoat treated layer 13 was made of a multilayer, it was formed successively from a first layer in Table 2. For instance, with Example 4, BL-2 was coated and dried and BL-3 was subsequently coated and dried to form an undercoat treated layer 13.

The undercoat treating agent was coated by micro gravure coating. The coating amount was so set that a dry coating amount was at 70 to 100 mg/m², and the drying after the coating (baking treatment) was carried out at 120 to 200°C.

In Examples 8 to 9, a 0.030 µm thick adhesion improving layer 18 was further formed on the undercoat treated layer 13. The adhesion improving layer 18 was formed by coating a treating agent indicated in Table 2 in a dry coating amount of 70 to 100 mg/² and drying at 210°C.

### Step (III):

A base material SB-1 was bonded to the undercoat treated layer 13 (adhesion improving layer 18) over the aluminum foil layer 14, which was formed with the corrosion inhibition treatment layer 15 on one surface thereof and also with the undercoat treated layer 13 (and further with the adhesion improving layer 18 in Examples 8 to 9), by use of an adhesive AD-1 thereby laminating a base material layer 11 via an adhesive layer 12.

On this occasion, the adhesive AD-1 was used for lamination in a dry coating amount of 4 to 5 g/m² according to gravure reverse coating, followed by aging to cure the adhesive AD-1.

### Step (IV):

The laminate made of the base material layer 11, adhesive layer 12, adhesion improving layer 18 (only in Examples 8 to 9), undercoat treated layer 13, aluminum foil layer 14 and corrosion inhibition treatment layer 15 was set at a feed unit, and a film SL-1 forming a sealant layer 17 was set up from a sandwich base material unit and an adhesive resin AR-1 was extruded from an extruder at 290°C, followed by lamination of the sealant layer 17 via the adhesive resin layer 16 at a processing rate of 80 m/minute according to a sandwich lamination technique.

### Step (V):

The resulting laminate was passed between thermocompression rolls heated to 150 to 200°C and thus thermally treated to obtain a packaging material.

The resulting packaging materials were subjected to the evaluations set out before, with the results shown in Table 3.

### [Examples 14 to 18]

In the same manner as in Example 1, packaging materials having a layer structure shown in Fig. 3 were made except that steps subsequent to the step (IV) were carried out according to the following procedure.

The sealant layer 17 was laminated via the adhesive layer 19 by bonding the film SL-1 to, by use of an adhesive indicated in Table 2, the corrosion inhibition treatment layer 15 of the laminate made of the base material layer 11, adhesive layer 12, undercoat treated layer 13, aluminum foil layer 14 and the corrosion inhibition treatment layer 15. On this occasion, the lamination was performed in such a way that the dry coating amount of the adhesive was made at 3 to 5 g/m² by gravure reverse coating. Thereafter, aging treatment was effected to cure the adhesive.

The resulting laminate was thermally treated by being passed between thermocompression rolls heated to 150 to 200°C to obtain a packaging material.

### [Comparative Example 1]

A packaging material was made in the same manner as in Example 1 but without forming an undercoat treated layer.

The resulting packaging material was subjected to the evaluations set out before. The results are shown in Table 3.

### [Comparative Examples 2 to 4]

Packaging materials were made in the same manner as in Example 1 except that treating agents indicated in Table 2 were used as an undercoat treatment agent.

The resulting packaging materials were subjected to the evaluations set out before. The results are shown in Table 3.

**[Table 2]**

| | Base material layer 11 | Adhesive layer 12 | Adhesion improving layer 18 | Undercoat treated layer 13 | | Aluminum foil layer 14 | Corrosion inhibition treatment layer 15 | | | Adhesive resin layer 16 Adhesive layer 19 | Sealant layer 17 |
|---|---|---|---|---|---|---|---|---|---|---|---|
| | | | | First layer | Second layer | | First layer | Second layer | Third layer | | |
| Example 1 | SB-1 | AD-1 | - | BL-1-1 | - | AL-1 | CL-1 | CL-2 | CL-3 | AR-1 | SL-1 |
| Example 2 | ↑ | ↑ | - | BL-1-2 | - | ↑ | ↑ | ↑ | ↑ | ↑ | ↑ |
| Example 3 | ↑ | ↑ | - | BL-1-3 | - | ↑ | ↑ | ↑ | ↑ | ↑ | ↑ |
| Example 4 | ↑ | ↑ | - | BL-2 | BL-3 | ↑ | ↑ | ↑ | ↑ | ↑ | ↑ |
| Example 5 | ↑ | ↑ | - | BL-2 | BL-6 | ↑ | ↑ | ↑ | ↑ | ↑ | ↑ |
| Example 6 | ↑ | ↑ | - | BL-4 | - | ↑ | ↑ | ↑ | ↑ | ↑ | ↑ |
| Example 7 | ↑ | ↑ | - | BL-5 | - | ↑ | ↑ | ↑ | ↑ | ↑ | ↑ |
| Example 8 | ↑ | ↑ | D-1 | BL-1-1 | - | ↑ | ↑ | ↑ | ↑ | ↑ | ↑ |
| Example 9 | ↑ | ↑ | D-2 | ↑ | - | ↑ | ↑ | ↑ | ↑ | ↑ | ↑ |
| Example 10 | ↑ | ↑ | - | t | - | ↑ | ↑ | ↑ | - | ↑ | ↑ |
| Example 11 | ↑ | ↑ | - | ↑ | - | ↑ | ↑ | CL-3 | - | ↑ | ↑ |
| Example 12 | ↑ | ↑ | - | ↑ | - | ↑ | ↑ | CL-2 | CL-4 | ↑ | ↑ |
| Example 13 | ↑ | ↑ | - | ↑ | - | ↑ | CL-5 | - | - | ↑ | ↑ |
| Example 14 | ↑ | ↑ | - | ↑ | - | ↑ | CL-1 | CL-2 | - | AI-1 | ↑ |
| Example 15 | ↑ | ↑ | - | ↑ | - | ↑ | ↑ | ↑ | - | AI-2 | ↑ |
| Example 16 | ↑ | ↑ | - | ↑ | - | ↑ | ↑ | ↑ | - | AI-3 | ↑ |
| Example 17 | ↑ | ↑ | - | ↑ | - | ↑ | ↑ | ↑ | - | AI-4 | ↑ |
| Example 18 | ↑ | ↑ | - | ↑ | - | ↑ | ↑ | ↑ | - | AI-5 | ↑ |
| Comparative Example 1 | ↑ | ↑ | - | - | - | ↑ | ↑ | ↑ | CL-3 | AR-1 | ↑ |
| Comparative Example 2 | ↑ | ↑ | - | BL-2 | - | ↑ | ↑ | ↑ | ↑ | ↑ | ↑ |
| Comparative Example 3 | ↑ | ↑ | - | BL-1-4 | - | ↑ | ↑ | ↑ | ↑ | ↑ | ↑ |
| Comparative Example 4 | ↑ | ↑ | - | BL-1-5 | - | ↑ | ↑ | ↑ | ↑ | ↑ | ↑ |

In Table 2, "↑" indicates the use of the same layer as indicated above.

**[Table 3]**

| | Evaluation of formability (1) | Evaluation of formability (2) | Overall evaluation |
|---|---|---|---|
| Example 1 | ○ | ○ | Acceptable |
| Example 2 | ○ | ○ | Acceptable |
| Example 3 | ○ | Δ | Acceptable |
| Example 4 | ○ | ○ | Acceptable |
| Example 5 | ○ | ○ | Acceptable |
| Example 6 | ○ | ⊕ | Acceptable |
| Example 7 | ○ | ⊕ | Acceptable |
| Example 8 | ○ | ⊕ | Acceptable |
| Example 9 | ○ | ⊕ | Acceptable |
| Example 10 | ○ | ○ | Acceptable |
| Example 11 | ○ | ○ | Acceptable |
| Example 12 | ○ | ○ | Acceptable |
| Example 13 | ○ | ○ | Acceptable |
| Example 14 | ○ | ○ | Acceptable |
| Example 15 | ○ | ○ | Acceptable |
| Example 16 | ○ | ○ | Acceptable |
| Example 17 | ○ | ○ | Acceptable |
| Example 18 | ○ | ○ | Acceptable |
| Comparative Example 1 | X | X | Not acceptable |
| Comparative Example 2 | X | X | Not acceptable |
| Comparative Example 3 | ○ | X | Not acceptable |
| Comparative Example 4 | ○ | X | Not acceptable |

The above results reveal that the packaging materials of Examples 1 to 18 having the undercoat treated layer 13 formed by use of the components (A) to (C) showed good results with respect to the evaluations of moldability (1), (2) without forming a conventional chemical conversion treatment layer, and that adhesion between the base material layer 11 and the aluminum foil layer 14 was high, and excellent adhesiveness was secured in the respective storage environments. With Examples 6, 7 wherein the component (E) or (F) was formulated in the undercoat treatment agent, the adhesiveness in the respective storage environments was further improved. In Examples 8, 9 wherein the adhesion improving layer 18 was provided, the adhesiveness in the respective environments was further improved as well.

On the other hand, with Comparative Example 1 wherein no undercoat treated layer 13 was formed and also with Comparative Example 2 wherein the undercoat treated layer 13 was free of component (A), lifting was observed with respect to the evaluations of moldability (1), (2) and adhesiveness was poor.

As to Comparative Example 3 wherein although the components (A) to (C) were contained, a total amount of the components (B) and (C) was at 100 parts by mass per 100 parts by mass of the component (A) and also as to Comparative Example 4 wherein a total amount of the components (B) and (C) was at 99900 parts by mass per 100 parts by mass of the component (A), no lifting was found in the evaluation of moldability (1), but lifting was observed in the evaluation of moldability (2).

### Industrial Applicability

The packaging material for lithium ion cell of the invention is high in adhesiveness and has excellent deep draw moldability without forming a conventional chemical conversion treatment layer. Accordingly, it is assumed that the packaging material for lithium ion cell of the invention can be developed in the future for large-scale applications and automotive applications asking for an improved durable life. Especially, with applications to HEV and EV, the rapid growth in the market will be hereafter expected from the ecological aspect. In the case where a conventional chemical conversion treatment layer is used, there is some concern that some type of material used in coating compositions may become environmentally harmful. The use of the technology of the present invention is advantageous from the environmental aspects such as a natural environment and a working environment. Since a coating type of corrosion inhibition treatment layer is formed as the corrosion inhibition treatment layer without use of chemical conversion treatment, it becomes possible to provide a packaging material for lithium ion cell, which is favorable from an environmental aspect at both the base material layer side and the sealant layer side of the aluminum foil.

### Reference Signs List

1 packaging material, 2 packaging material, 3 packaging material, 11 base material layer, 12 adhesive layer, 13 undercoat treated layer, 14 aluminum foil layer, 15 corrosion inhibition treatment layer, 16 adhesive resin layer, 17 sealant layer, 18 adhesion improving layer, 19 adhesive layer (second adhesive layer)

## Claims

1. A packaging material (1, 2, 3) for lithium ion cell comprising a laminate including a first adhesive layer (12), an undercoat treated layer (13), an aluminum foil layer (14), a corrosion inhibition treatment layer (15), an adhesive resin layer (16) or a second adhesive layer (19), and a sealant layer (17) successively stacked on one surface of a base material layer (11), wherein the adhesive resin layer (16) comprises a modified polyolefin resin and the second adhesive layer (19) comprises polyurethane,
wherein the undercoat treated layer (13) contains components (A), (B) and (C),
wherein component (A) is a crosslinking resin formed of (A1) a resin having two or more nitrogen-containing functional groups and (A2) a resin having a reactive functional group capable of reaction with the nitrogen-containing functional groups, component (B) is a rare earth element oxide and component (C) is phosphoric acid or a phosphate,
wherein a total amount of the components (B) and (C) is 200 to
12000 parts by mass per 100 parts by mass of the component (A).

2. The packaging material for lithium ion cell as defined in Claim 1, wherein the resin (A1) is an oxazoline group-containing resin containing two or more oxazoline groups, and the resin (A2) is at least one acrylic resin selected from the group consisting of poly(meth)acrylic acid, copolymers of (meth)acrylic acid and other types of polymerizable monomers and ion-neutralized products thereof.

3. The packaging material for lithium ion cell as defined in Claim 1 or 2, wherein a thickness of the undercoat treated layer (13) is at 0.001 to 1 µm.

4. The packaging material for lithium ion cell as defined in any one of Claims 1 to 3, wherein the undercoat treated layer (13) further comprises component (E), wherein component (E) is at least one compound selected from the group consisting of organosilanes represented by the following formula (1), hydrolyzates of the organosilanes and derivatives thereof, metal alkoxides represented by the following formula (2), hydrolyzates of the metal alkoxides and derivatives thereof
R¹-Si(OR²)₃ ... (1)
M(OR³)ₙ ... (2)
(wherein R¹ is an organic group containing an alkyl group, a (meth)acryloyloxy group, a vinyl group, an amino group, an epoxy group or an isocyanate group, R² is an alkyl group, M is a metal ion, R³ is an alkyl group and n is a number corresponding to the valence of the metal ion),
wherein the content of the component (E) is at 0.1 to 100 parts by mass per 100 parts by mass of the component (A).

5. The packaging material for lithium ion cell as defined in any one of Claims 1 to 4, wherein the undercoat treated layer (13) further comprises component (F), wherein component (F) is a metal compound made of a zirconium compound,
wherein a content of the component (F), calculated as metal, is at 0.1 to 100 parts by mass per 100 parts by mass of the component (A).

6. The packaging material for lithium ion cell as defined in any one of Claims 1 to 5, further comprising an adhesion improving layer (18), which is provided between the first adhesive layer (12) and the undercoat treated layer (13), wherein the adhesion improving layer is made of a crosslinked resin obtained by crosslinking at least one basic resin selected from the group consisting of a polyethylene imine, an ion-polymer complex formed of a polyethylene imine and a polymer having a carboxylic acid, a primary amine-grafted acrylic resin, a polyamine and a derivatives thereof, and an aminophenol resin.

## Patentansprüche

1. Verpackungsmaterial (1, 2, 3) für eine Lithiumionenzelle, umfassend ein Laminat, das eine erste Klebeschicht (12), eine Grundschicht (13), eine Aluminiumfolienschicht (14), eine Korrosionshemmschicht (15), eine Klebeharzschicht (16) oder eine zweite Klebeschicht (19), und eine Versiegelungsschicht (17), die nacheinander auf einer Oberfläche einer Basismaterialschicht (11) geschichtet sind, enthält, wobei die Klebeharzschicht (16) ein modifiziertes Polyolefinharz umfasst und die zweite Klebeschicht (19) Polyurethan umfasst,
wobei die Grundschicht (13) die Komponenten (A), (B) und (C) enthält,
wobei Komponente (A) ein Vernetzerharz ist, das aus (A1) einem Harz mit zwei oder mehr Stickstoff-haltigen funktionellen Gruppen und (A2) einem Harz mit einer reaktiven funktionellen Gruppe, die mit den Stickstoff-haltigen funktionellen Gruppen reagieren kann, gebildet ist, Komponente (B) ein Seltenerdelementoxid ist und Komponente (C) Phosphorsäure oder ein Phosphat ist,
wobei die Gesamtmenge der Komponenten (B) und (C) 200 bis 12000 Massenteile pro 100 Massenteile der Komponente (A) beträgt.

2. Verpackungsmaterial für eine Lithiumionenzelle nach Anspruch 1, wobei das Harz (A1) ein Oxazolingruppen-haltiges Harz ist, das zwei oder mehr Oxazolingruppen enthält, und das Harz (A2) mindestens ein Acrylharz ausgewählt aus der Gruppe bestehend aus Poly(meth)acrylsäure, Copolymeren von (Meth)acrylsäure und anderen Arten von polymerisierbaren Monomeren und Ionen-neutralisierten Produkten davon ist.

3. Verpackungsmaterial für eine Lithiumionenzelle nach Anspruch 1 oder 2, wobei eine Dicke der Grundschicht (13) 0,001 bis 1 µm beträgt.

4. Verpackungsmaterial für eine Lithiumionenzelle nach mindestens einem der Ansprüche 1 bis 3, wobei die Grundschicht (13) ferner Komponente (E) umfasst, wobei Komponente (E) mindestens eine Verbindung ausgewählt aus der Gruppe bestehend aus Organosilanen mit der folgenden Formel (1), Hydrolysaten der Organosilane und Derivaten davon, Metallalkoxiden mit der folgenden Formel (2), Hydrolysaten der Metallalkoxide und Derivaten davon ist
R¹-Si(OR²)₃ ... (1)
M(OR³)ₙ ... (2)
(worin R¹ eine organische Gruppe ist, die eine Alkylgruppe, eine (Meth)acryloyloxygruppe, eine Vinylgruppe, eine Aminogruppe, eine Epoxidgruppe oder eine Isocyanatgruppe enthält, R² eine Alkylgruppe ist, M ein Metallion ist, R³ eine Alkylgruppe ist und n eine Zahl ist, die der Valenz des Metallions entspricht),
wobei der Gehalt der Komponente (E) 0,1 bis 100 Massenteile pro 100 Massenteile der Komponente (A) beträgt.

5. Verpackungsmaterial für eine Lithiumionenzelle nach mindestens einem der Ansprüche 1 bis 4, wobei die Grundschicht (13) ferner Komponente (F) umfasst, wobei Komponente (F) eine Metallverbindung ist, die aus einer Zirkoniumverbindung hergestellt ist,
wobei der Gehalt der Komponente (F), berechnet als Metall, 0,1 bis 100 Massenteile pro 100 Massenteile der Komponente (A) beträgt.

6. Verpackungsmaterial für eine Lithiumionenzelle nach mindestens einem der Ansprüche 1 bis 5, das ferner eine haftungsverbessernde Schicht (18) umfasst, die zwischen der ersten Klebeschicht (12) und der Grundschicht (13) angeordnet ist, wobei die haftungsverbessernde Schicht aus einem vernetzten Harz hergestellt ist, das durch Vernetzen von mindestens einem Basisharz ausgewählt aus der Gruppe bestehend aus einem Polyethylenimin, einem Ionen-PolymerKomplex, der aus einem Polyethylenimin und einem Polymer, das eine Carbonsäure aufweist, gebildet ist, einem mit primärem Amin gepfropftem Acrylharz, einem Polyamin und Derivaten davon, und einem Aminophenolharz erhalten wurde.

## Revendications

1. Matériau d'emballage (1, 2, 3) pour pile lithium-ion comprenant un stratifié comportant une première couche adhésive (12), une couche traitée de sous-couche (13), une couche de feuille d'aluminium (14), une couche de traitement anticorrosion (15), une couche de résine adhésive (16) ou une seconde couche adhésive (19) et une couche d'étanchéité (17) empilées successivement sur une surface d'une couche de matériau de base (11), dans lequel la couche de résine adhésive (16) comprend une résine polyoléfinique modifiée et la seconde couche adhésive (19) comprend du polyuréthane,
dans lequel la couche traitée de sous-couche (13) contient des composants (A), (B) et (C),
dans lequel le composant (A) est une résine de réticulation formée de (A1) une résine ayant deux groupes fonctionnels contenant de l'azote ou plus et de (A2) une résine ayant un groupe fonctionnel réactif capable de réagir avec les groupes fonctionnels contenant de l'azote, le composant (B) est un oxyde d'élément de terre rare et le composé (C) est de l'acide phosphorique ou un phosphate,
dans lequel une quantité totale des composants (B) et (C) est de 200 à 12 000 parties en masse pour 100 parties en masse du composant (A).

2. Matériau d'emballage pour pile lithium-ion selon la revendication 1, dans lequel la résine (A1) est une résine contenant des groupes oxazoline contenant deux groupes oxazoline ou plus, et la résine (A2) est au moins une résine acrylique choisie dans le groupe constitué de l'acide poly(méth)acrylique, de copolymères d'acide (méth)acrylique et d'autres types de monomères polymérisables et de leurs produits à ions neutralisés.

3. Matériau d'emballage pour pile lithium-ion selon la revendication 1 ou 2, dans lequel une épaisseur de la couche traitée de sous-couche (13) est de 0,001 à 1 µm.

4. Matériau d'emballage pour pile lithium-ion selon l'une quelconque des revendications 1 à 3, dans lequel la couche traitée de sous-couche (13) comprend en outre un composant (E), dans lequel le composant (E) est au moins un composant choisi dans le groupe constitué d'organosilanes représentés par la formule suivante (1), d'hydrolysats des organosilanes et de leurs dérivés, d'alcoxydes métalliques représentés par la formule suivante (2), d'hydrolysats des alcoxydes métalliques et de leurs dérivés :
R¹-Si(OR²)₃ ... (1)
M(OR³)ₙ ... (2)
(où R¹ est un groupe organique contenant un groupe alkyle, un groupe (méth)acryloyloxy, un groupe vinyle, un groupement amino, un groupe époxy ou un groupe isocyanate, R² est un groupement alkyle, M est un ion métallique, R³ est un groupe alkyle et n est un nombre correspondant à la valence de l'ion métallique),
dans lequel la teneur du composant (E) est de 0,1 à 100 parties en masse pour 100 parties en masse du composant (A).

5. Matériau d'emballage pour pile lithium-ion selon l'une quelconque des revendications 1 à 4, dans lequel la couche traitée de sous-couche (13) comprend en outre un composant (F), dans lequel le composant (F) est un composé métallique constitué d'un composé de zirconium,
dans lequel une teneur du composant (F) calculée en tant que métal est de 0,1 à 100 parties en masse pour 100 parties en masse du composant (A).

6. Matériau d'emballage pour pile lithium-ion selon l'une quelconque des revendications 1 à 5, comprenant en outre une couche promotrice d'adhérence (18) qui est disposée entre la première couche adhésive (12) et la couche traitée de sous-couche (13), dans lequel la couche promotrice d'adhérence est constituée d'une résine réticulée obtenue en réticulant au moins une résine basique choisie dans le groupe constitué d'une polyéthylèneimine, d'un complexe de polymère ionique formé d'une polyéthylèneimine et d'un polymère ayant un acide carboxylique, d'une résine acrylique greffée par une amine primaire, d'une polyamine et d'un de leurs dérivés, ainsi que d'une résine aminophénolique.
